(19) Europäisches Patentamt / European Patent Office / Office européen des brevets

(11) **EP 3 232 390 A1**

(12) **EUROPEAN PATENT APPLICATION**
published in accordance with Art. 153(4) EPC

(43) Date of publication:
**18.10.2017 Bulletin 2017/42**

(51) Int Cl.:
***G06Q 30/02*** (2012.01)

(21) Application number: **15866581.0**

(22) Date of filing: **27.11.2015**

(86) International application number:
**PCT/JP2015/005926**

(87) International publication number:
**WO 2016/092767 (16.06.2016 Gazette 2016/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.12.2014 JP 2014249953**

(71) Applicant: **NEC Corporation**
**Tokyo 108-8001 (JP)**

(72) Inventors:
• **NAKADAI, Shinji**
**Tokyo 108-8001 (JP)**
• **OCHIAI, Koutarou**
**Tokyo 108-8001 (JP)**
• **TERAKAWA, Takayuki**
**Tokyo 108-8001 (JP)**

(74) Representative: **Vossius & Partner**
**Patentanwälte Rechtsanwälte mbB**
**Siebertstrasse 3**
**81675 München (DE)**

(54) **GROUPING SYSTEM, GROUPING METHOD, AND GROUPING PROGRAM**

(57) There is provided a grouping system capable of defining groups of customers with similar purchase trends with high accuracy and defining groups of products or product-related items in terms of similar purchase trends, or groups of services or service-related items in terms of similar purchase trends with high accuracy. A purchase trend calculation means 3 calculates a trend of a customer to purchase a product per combination of customer and product or per combination of customer and product-related item as item related to a product on the basis of customers' product purchase situations. A grouping means 4 defines groups of customers and defines groups of products or groups of product-related items on the basis of the trends and a distribution of the trends.

## FIG. 22

## Description

Technical Field

The present invention relates to a grouping system for grouping customers and grouping products or product-related items, or services or service-related items, a grouping method, and a grouping program.

Background Art

NPL 1 describes a method for creating clusters of customers. With the method described in NPL 1, the properties such as "low cost" and "expensive" are previously given to the respective products. A property given to a product may be called product DNA. With the method described in NPL 1, the properties given to the products purchased by each customer are summed up and the result is assumed as a property of the customer. The property may be called customer DNA. With the method described in NPL 1, clusters of customers are created on the basis of the properties of the customers.

NPL 2 describes a method for classifying customers. With the method described in NPL 2, the product DNAs such as "easy and health-conscious" and "timesaving" indicating life styles are determined and given to various products. A customer who purchases a certain amount of products with "easy and health-conscious" is also classified into "easy and health-conscious," for example.

PTL 1 describes classifying customers according to reactions to prices or determining product categories on the basis of cross elasticity of demand or standard industrial classification system. PTL 1 describes grouping products in a product category by the types of the customers who purchase the products.

Citation List

Patent Literature

PTL 1: Japanese Translation of PCT International Application Publication No. 2008-516355 (see paragraphs 0021, 0027 to 0030 and others)

Non Patent Literature

NPL 1: Clive Humby, Terry Hunt, Tim Phillips, "Scoring Points: How Tesco continues to win customer loyalty", 2ND EDITION, Kogan Page Ltd.
NPL 2: "Purchase motives and life styles analyzed, 40% rise in sales by "product DNA" (2/2)", Nikkei Business Publications Inc. [searched on September 18, 2014], Internet <URL: http://itpro.nikkeibp.co.jp/article/JIREI/20081020/317282/?ST=cio&P=2>

Summary of Invention

Technical Problem

The present inventors of the present invention have assumed "groups of similar products in terms of purchase trends" and "groups of customers with similar purchase trends" defined as follows.

"Groups of similar products in terms of purchase trends" are groups of products for which the customers belonging to the same "group of customers with similar purchase trends" represent the similar purchase trends.

"Groups of customers with similar purchase trends" are groups of customers who represent the similar purchase trends for the products belonging to the same "group of similar products in terms of purchase trends."

"Groups of similar products in terms of purchase trends" are defined on the basis of "groups of customers with similar purchase trends" and "groups of customers with similar purchase trends" are defined on the basis of "groups of similar products in terms of purchase trends." Therefore, "groups of similar products in terms of purchase trends" and "groups of customers with similar purchase trends" are in a relationship of chicken and egg.

It is useful to define "groups of customers with similar purchase trends" and "groups of similar products in terms of purchase trends" for analyzing the values which various customers feel for various products. It is also useful to define groups of product-related items such as groups of similar product categories in terms of purchase trends instead of groups of products. The groups of similar product categories in terms of purchase trends and the like are defined by replacing products with product categories and the like in the definition of groups of similar products in terms of purchase trends.

With the method described in NPL 1, however, the accuracy of "group of customers with similar purchase trends" can be deteriorated. With the method described in NPL 1, the work of giving the properties to each product is manually performed. Thus, the accuracy of clusters of customers obtained by the method described in NPL 1 depends on how to give the properties to products, and the accuracy of the clusters of customers can be deteriorated. The method described in NPL 2 is the same.

It is therefore an object of the present invention to provide a grouping system capable of defining groups of customers with similar purchase trends with high accuracy, and defining groups of similar products or product-related items in terms of purchase trends, or groups of similar services or service-related items in terms of purchase trends with high accuracy, a grouping method, and a grouping program.

Solution to Problem

A grouping system according to the present invention includes: a purchase trend calculation means configured to calculate a trend of a customer to purchase a product per combination of customer and product or per combination of customer and product-related item as item related to a product on the basis of customers' product purchase situations; and a grouping means configured to define groups of customers and defining groups of products or groups of product-related items on the basis of the trends and a distribution of the trends.

Further, a grouping system according to the present invention includes: a characteristic amount calculation means configured to calculate the characteristic amount of a product per product; and a grouping means configured to define groups of customers and groups of products on the basis of a product purchase performance obtained per combination of customer and product, a distribution of the product purchase performance, the characteristic amount per product, and a distribution of the characteristic amount.

Further, a grouping system according to the present invention includes: a purchase trend calculation means configured to calculate a trend of a customer to purchase a service per combination of customer and service or per combination of customer and service-related item as item related to a service on the basis of customers' service purchase situations; and a grouping means configured to define groups of customers and defining groups of services or groups of service-related items on the basis of the trends and a distribution of the trends.

Further, a grouping system according to the present invention includes: a characteristic amount calculation means configured to calculate the characteristic amount of a service per service; and a grouping means configured to define groups of customers and groups of services on the basis of a service purchase performance obtained per combination of customer and service, a distribution of the service purchase performance, the characteristic amount per service, and a distribution of the characteristic amount.

Further, a grouping method according to the present invention includes: calculating a trend of a customer to purchase a product per combination of customer and product or per combination of customer and product-related item as item related to a product on the basis of customers' product purchase situations; and defining groups of customers and defining groups of products or groups of product-related items on the basis of the trends and a distribution of the trends.

Further, a grouping method according to the present invention includes: calculating the characteristic amount of a product per product; and defining groups of customers and groups of products on the basis of a product purchase performance obtained per combination of customer and product, a distribution of the product purchase performance, the characteristic amount per product, and a distribution of the characteristic amount.

Further, a grouping method according to the present invention includes: calculating a trend of a customer to purchase a service per combination of customer and service or per combination of customer and service-related item as item related to a service on the basis of customers' service purchase situations; and defining groups of customers and defining groups of services or groups of service-related items on the basis of the trends and a distribution of the trends.

Further, a grouping method according to the present invention includes: calculating the characteristic amount of a service per service; and defining groups of customers and groups of services on the basis of a service purchase performance obtained per combination of customer and service, a distribution of the service purchase performance, the characteristic amount per service, and a distribution of the characteristic amount.

Further, a grouping program according to the present invention causes a computer to perform: a purchase trend calculation processing of calculating a trend of a customer to purchase a product per combination of customer and product or per combination of customer and product-related item as item related to a product on the basis of customers' product purchase situations; and a grouping processing of defining groups of customers and defining groups of products or groups of product-related items on the basis of the trends and a distribution of the trends.

Further, a grouping program according to the present invention causes a computer to perform: a characteristic amount calculation processing of calculating the characteristic amount of a product per product; and a grouping processing of defining groups of customers and groups of products on the basis of a product purchase performance obtained per combination of customer and product, a distribution of the product purchase performance, the characteristic amount per product, and a distribution of the characteristic amount.

Further, a grouping program according to the present invention causes a computer to perform: a purchase trend calculation processing of calculating a trend of a customer to purchase a service per combination of customer and service or per combination of customer and service-related item as item related to a service on the basis of customers' service purchase situations; and a grouping processing of defining groups of customers and defining groups of services or groups of service-related items on the basis of the trends and a distribution of the trends.

Further, a grouping program according to the present invention causes a computer to perform: a characteristic amount calculation processing of calculating the characteristic amount of a service per service; and a grouping processing of defining groups of customers and groups of services on the basis of a service purchase performance obtained per combination of customer and service, a distribution of the service purchase performance, the characteristic amount per service, and a distribution of the characteristic amount.

Advantageous Effects of Invention

According to the present invention, it is possible to define groups of customers with similar purchase trends with high accuracy and to define groups of similar products or product-related items in terms of purchase trends, or groups of similar services or service-related items in terms of purchase trends with high accuracy

Brief Description of Drawings

[Fig. 1] It depicts a block diagram illustrating an exemplary grouping system according to a first exemplary embodiment of the present invention.
[Fig. 2] It depicts a diagram schematically illustrating customer ID and product ID before Co-clustering is performed.
[Fig. 3] It depicts an explanatory diagram schematically illustrating examples of a group of customers and a group of products defined by a grouping means.
[Fig. 4] It depicts a flowchart illustrating an exemplary processing progress according to the first exemplary embodiment of the resent invention.
[Fig. 5] It depicts a block diagram illustrating an exemplary grouping system according to a second exemplary embodiment of the present invention.
[Fig. 6] It depicts a flowchart illustrating an exemplary processing progress according to the second exemplary embodiment of the present invention.
[Fig. 7] It depicts a schematic diagram illustrating exemplary customer master.
[Fig. 8] It depicts a schematic diagram illustrating exemplary product master.
[Fig. 9] It depicts a schematic diagram illustrating exemplary purchase data.
[Fig. 10] It depicts a diagram illustrating exemplary average value and standard deviation calculated for two product categories.
[Fig. 11] It depicts a diagram illustrating an exemplary relative price calculated per product.
[Fig. 12] It depicts a diagram illustrating exemplary information in which the purchase number is associated with a combination of customer ID, product ID and actual product sales price.
[Fig. 13] It depicts a diagram illustrating exemplary information in which product ID is associated with advertising date.
[Fig. 14] It depicts a diagram illustrating exemplary information in which customer ID, product ID, and elapsed days after advertising date are associated.
[Fig. 15] It depicts a diagram illustrating exemplary information in which customer ID, product ID, and elapsed days after launch date are associated.
[Fig. 16] It depicts a diagram illustrating exemplary information in which customer ID, product ID, and average purchase interval are associated.
[Fig. 17] It depicts a schematic diagram illustrating exemplary product master.
[Fig. 18] It depicts a schematic diagram illustrating exemplary purchase data.
[Fig. 19] It depicts a diagram illustrating an exemplary degree of persistence per combination of customer ID and product category.
[Fig. 20] It depicts a diagram illustrating an exemplary relationship among customer ID, pastry manufacturer, and the number of purchased pastries of the manufacturer.
[Fig. 21] It depicts a schematic block diagram illustrating an exemplary configuration of a computer according to each exemplary embodiment of the present invention.
[Fig. 22] It depicts a block diagram illustrating an exemplary outline of the present invention.

[Fig. 23] It depicts a block diagram illustrating other exemplary outline of the present invention.

[Fig. 24] It depicts a block diagram illustrating an exemplary configuration of a grouping system when a trend of a customer to purchase a product (purchase trend index) is acquired from the outside.

[Fig. 25] It depicts a block diagram illustrating an exemplary configuration of a grouping system when the characteristic amount of a product and a product purchase performance (product purchase performance value) are acquired from the outside.

Description of Embodiments

Exemplary embodiments of the present invention will be described below with reference to the drawings. Each exemplary embodiment of the present invention will be described below assuming that customers are grouped and products or product-related items are grouped. According to the present invention, customers may be grouped, and services or service-related items (such as service categories) may be grouped.

First exemplary embodiment

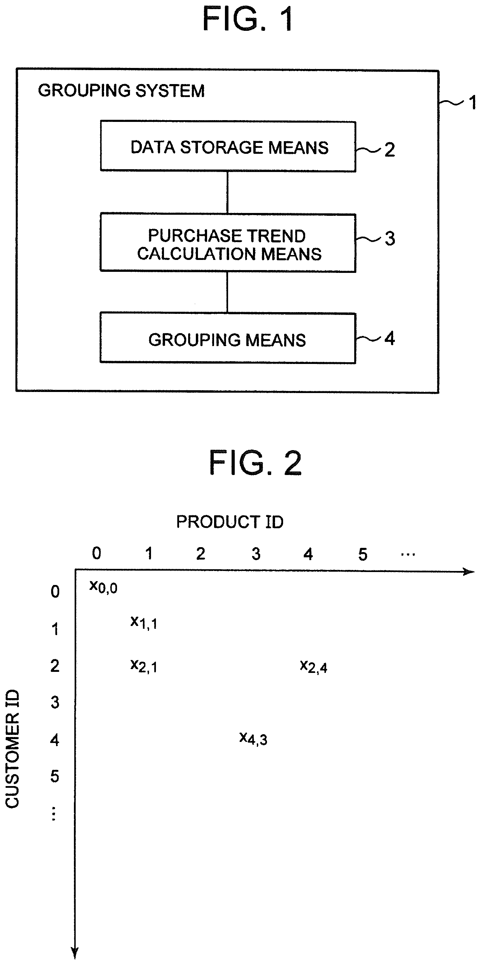

Fig. 1 is a block diagram illustrating an exemplary grouping system according to a first exemplary embodiment of the present invention. A grouping system 1 according to the first exemplary embodiment includes a data storage means 2, a purchase trend calculation means 3, and a grouping means 4.

The data storage means 2 is a storage device for storing purchase data indicating customers' product purchase situations. The data storage means 2 may store customer master and product master, for example, and may store, as the purchase data, information in which customer ID, product ID, product sales price, and purchase date are associated on each purchase date when a customer purchases a product. Customer master is information on attributes (such as age and sex) of each customer. For example, customer master is a set of information in which customer ID is associated with each attribute of the customer. Product master is information on attributes (such as product name, standard price, product category and launch date) of each product. For example, product master is a set of information in which product ID is associated with each attribute of the product. Customer ID is identification information of a customer, and product ID is identification information of a product.

The purchase trend calculation means 3 calculates a purchase trend index per combination of customer and product on the basis of the purchase data. The purchase trend index is an index indicating a trend of a customer to purchase a product. The purchase trend index can take various values. An exemplary operation of the purchase trend calculation means 3 for calculating a purchase trend index will be described below.

When a customer has not purchased a product, the purchase trend calculation means 3 may not calculate the purchase trend index for the combination of the customer and the product.

In the following description, a customer is identified by customer ID. Customer ID is denoted by sign c. A product is identified by product ID. Product ID is denoted by sign i. The purchase trend index calculated by the purchase trend calculation means 3 for a combination of customer with customer ID of "c" and product with product ID of "i" is denoted as $x_{c,i}$. For example, the purchase trend index calculated for a combination of customer with customer ID of "2" and product with product ID of "5" is denoted as $x_{2,5}$.

A customer with customer ID of "c" is denoted as customer "c." A product with product ID of "i" is denoted as product "i."

Further, the purchase trend calculation means 3 designates a type of a distribution of the purchase trend index. A type of the distribution of the purchase trend index may change depending on a value calculated as the purchase trend index.

Further, the purchase trend calculation means 3 may calculate the purchase trend index not per combination of customer and product but per combination of customer and product-related item. A product-related item is not a product itself but an item related to a product. An example of the product-related item may be a product category, for example. The product-related item is not limited to product category. The product-related item is also identified by ID. ID for identifying a product-related item is denoted by i similarly to product ID. A purchase trend index calculated for a combination of customer with customer ID of "c" and product-related item with ID of "i" is denoted as $x_{c,i}$.

A product-related item with ID of "i" is denoted as product-related item "i." For example, a product category with ID of "1" is denoted as product category "1."

When the purchase trend calculation means 3 calculates the product trend index $x_{c,i}$ per combination of customer and product, the grouping means 4 defines a group of the customer and a group of the product.

When the purchase trend calculation means 3 calculates the purchase trend index $x_{c,i}$ per combination of customer and product-related item, the grouping means 4 defines a group of the customer and a group of the product-related item. For example, when the purchase trend calculation means 3 calculates the purchase trend index $x_{c,i}$ per combination of customer and product category, the grouping means 4 defines a group of the customer and a group of the product category

Examples of the purchase trend index will be described below. The purchase trend calculation means 3 may calculate any of the following exemplary purchase trend indexes. Alternatively, the purchase trend calculation means 3 may calculate a value other than the following exemplary values as the purchase trend index. In the following description, natural logarithm of any variable v is denoted as ln(v).

(Example 1)

In Example 1, the purchase trend calculation means 3 calculates a degree at which a customer changes the amount of products to be purchased depending on a reduction in price of the product as the purchase trend index. For example, the purchase trend calculation means 3 calculates price elasticity as the purchase trend index.

In this case, the purchase trend calculation means 3 creates information in which the purchase amount is associated with a combination of customer ID, product ID, and actual product sales price on the basis of the purchase data, for example. At this time, even when the customer IDs are common and the product IDs are common, if the sales prices are different, the purchase trend calculation means 3 assumes different combinations. That is, the purchase trend calculation means 3 specifies the purchase number per actual product sales price for a combination of customer ID and product ID.

Actual product sales price can vary, and thus the sales price is denoted as price variable $price^{c, i}$. The purchase amount corresponding to a combination of customer ID, product ID, and actual sales price can also vary, and thus the purchase amount is denoted as purchase amount variable $volume^{c, i}$. The purchase trend calculation means 3 makes regression analysis with objective variable of $ln(volume^{c, i})$ and explanatory variable of $ln(price^{c, i})$ with reference to the information created on the basis of the purchase data. $w^{c, i}$ in the following Equation (1) is obtained by the regression analysis.

$$\ln(volume^{c, i}) = w^{c, i} \times \ln(price^{c, i}) + b \qquad \text{Equation (1)}$$

The purchase trend calculation means 3 calculates $w^{c, i}$ in Equation (1) as the purchase trend index $x_{c, i}$.

Further, the purchase trend calculation means 3 may find the absolute value of $w^{c, i}$ as the purchase trend index $x_{c, i}$. The value is price elasticity.

In Example 1, the purchase trend calculation means 3 designates the normal distribution, for example, as a type of the distribution of the purchase trend index $x_{c, i}$.

(Example 2)

In Example 2, the purchase trend calculation means 3 calculates a value indicating how many days until a customer purchases a product after the advertising date of the product as the purchase trend index.

In this case, the information in which the product ID is associated with the advertising date of the product is also stored in the data storage means 2.

The purchase trend calculation means 3 creates information in which customer ID, product ID, and elapsed days after the immediate advertising date of the product are associated on each purchase date when the customer purchases the product on the basis of the purchase data, for example.

The elapsed days until each purchase date when a customer "c" purchases a product "i" after the advertising date of the product are denoted as elapsed days variable $day^{c, i}$. The purchase amount for which the customer "c" purchases the product "i" on each purchase date is denoted as purchase amount variable $volume^{c, i}$. The purchase trend calculation means 3 obtains $w^{c, i}$ in the following Equation (2) by regression analysis with objective variable of $ln(volume^{c, i})$ and explanatory variable $ln(day^{c, i})$ with reference to the information created on the basis of the purchase data.

$$\ln(volume^{c, i}) = w^{c, i} \times \ln(day^{c, i}) + b \qquad \text{Equation (2)}$$

The purchase trend calculation means 3 calculates $w^{c, i}$ in Equation (2) as the purchase trend index $x_{c, i}$.

Further, the purchase trend calculation means 3 may find the reciprocal of the absolute value of $w^{c, i}$ as the purchase trend index $x_{c, i}$. The value can be an advertisement effective life of product "i" for customer "c."

In Example 2, the purchase trend calculation means 3 designates the normal distribution, for example, as a type of the distribution of the purchase trend index $x_{c, i}$.

(Example 3)

In Example 3, the purchase trend calculation means 3 calculates a value indicating how many days until a customer purchases a new product after the launch date of the product as the purchase trend index.

In this case, the purchase trend calculation means 3 creates information in which customer ID, product ID, and elapsed days after the launch date of the product are associated on each purchase date when the customer purchases the product on the basis of the purchase data, for example.

The elapsed days until each date when a customer "c" purchases a product "i" after the launch date of the product are denoted as elapsed days variable $day^{c,\,i}$. Further, the purchase amount for which the customer "c" purchases the product "i" on each purchase date is denoted as the purchase amount variable $volume^{c,\,i}$. The purchase trend calculation means 3 obtains $w^{c,\,i}$ in the following Equation (3) by regression analysis with objective variable of $\ln(volume^{c,\,i})$ and explanatory variable of $\ln(day^{c,\,i})$ with reference to the information created on the basis of the purchase data.

$$\ln(volume^{c,\,i}) = w^{c,\,i} \times \ln(day^{c,\,i}) + b \qquad\qquad \text{Equation (3)}$$

The purchase trend calculation means 3 calculates $w^{c,\,i}$ in Equation (3) as the purchase trend index $x_{c,\,i}$.

Further, the purchase trend calculation means 3 may find the reciprocal of the absolute value of $w^{c,\,i}$ as the purchase trend index $x_{c,\,i}$. The value can be a new product sensitivity life.

In Equation 3, the purchase trend calculation means 3 designates the normal distribution, for example, as a type of the distribution of the purchase trend index $x_{c,\,i}$. Alternatively, the purchase trend calculation means 3 may designate the Poisson distribution.

(Example 4)

In Example 4, the purchase trend calculation means 3 calculates a value indicating how many days until a customer purchases a product after the product is on display in a shop as the purchase trend index.

In this case, the data storage means 2 stores information in which product ID is associated with display date of the product.

The purchase trend calculation means 3 creates information in which customer ID, product ID, and elapsed days after the display date of the product are associated on each purchase date when the customer purchases the product on the basis of the purchase data, for example.

The elapsed days until each purchase date when a customer "c" purchases a product "i" after the display date of the product are denoted as elapsed days variable $day^{c,\,i}$. Further, the purchase amount for which the customer "c" purchases the product "i" on each purchase date is denoted as the purchase amount variable $volume^{c,\,i}$. The purchase trend calculation means 3 obtains $w^{c,\,i}$ in the following Equation (4) by regression analysis with objective variable of $\ln(volume^{c,\,i})$ and explanatory variable of $\ln(day^{c,\,i})$ with reference to the information created on the basis of the purchase data.

$$\ln(volume^{c,\,i}) = w^{c,\,i} \times \ln(day^{c,\,i}) + b \qquad\qquad \text{Equation (4)}$$

The purchase trend calculation means 3 calculates $w^{c,\,i}$ in Equation (4) as the purchase trend index $x_{c,\,i}$.

Further, the purchase trend calculation means 3 may find the reciprocal of the absolute value of $w^{c,\,i}$ as the purchase trend index $x_{c,\,i}$.

In Example 4, the purchase trend calculation means 3 designates the normal distribution, for example, as a type of the distribution of the purchase trend index $x_{c,\,i}$.

When a shot temporarily stops displaying a product and restarts displaying the product, the purchase trend calculation means 3 may create information in which customer ID, product ID, and elapsed days after the display date of the product are associated.

(Example 5)

In Example 5, the purchase trend calculation means 3 calculates a value indicating how many days after a customer purchases a product and until he/she purchases the product again as the purchase trend index.

In this case, the purchase trend calculation means 3 creates information in which customer ID, product ID, and average product purchase interval are associated on the basis of the purchase data, for example. The average purchase interval corresponding to a combination of customer ID and product ID is assumed as the purchase trend index $x_{c,i}$.

That is, the purchase trend calculation means 3 calculates how many days after a customer "c" purchases a product "i" and until the same customer "c" purchases the same product "i," and calculates an average value of the elapsed days as the purchase trend index $x_{c,i}$.

In Example 5, the purchase trend calculation means 3 designates the normal distribution, for example, as a type of the distribution of the purchase trend index $x_{c,i}$.

In Example 1 to Example 5, the purchase trend calculation means 3 calculates the purchase trend index $x_{c,i}$ per combination of customer and product.

(Example 6)

In Example 6, the purchase trend calculation means 3 calculates a degree of persistence (or a degree of attachment) of a customer for an individual product in a product category as the purchase trend index.

In Example 6, the purchase trend calculation means 3 calculates the Herfindahl-Hirschman index or the Gini coefficient, for example, as the purchase trend index $x_{c,i}$. For example, when calculating the Herfindahl-Hirschman index, the purchase trend calculation means 3 finds the purchase share of a product belonging to a product category "i" in the product category "i" for a customer "c", and calculates a total sum of the squares of the purchase share found per each product belonging to the product category "i." The purchase trend calculation means 3 assumes the value (Herfindahl-Hirschman index) as the purchase trend index $x_{c,i}$. In the present example, the purchase trend calculation means 3 calculates the purchase trend index $x_{c,i}$ per combination of customer and product category.

A low value of $x_{c,i}$ indicates that a customer "c" buys various products in a product category "i" and wants a variety of products.

In Example 6, the purchase trend calculation means 3 designates the normal distribution, for example, as a type of the distribution of the purchase trend index $x_{c,i}$.

In Example 6, product DNA may be applied for product-related item instead of product category.

(Example 7)

In Example 7, the purchase trend calculation means 3 calculates a degree of persistence (or a degree of attachment) of a customer for a manufacturer of an individual product in a product category as the purchase trend index.

In Example 7, the purchase trend calculation means 3 calculates the Herfindahl-Hirschman index or the Gini coefficient as the purchase trend index $x_{c,i}$, for example. For example, when the Herfindahl-Hirschman index is calculated, the purchase share of each manufacturer belonging to a product category "i" in the product category "i" for a customer "c" is found and a total sum of the squares of the purchase share found for each manufacturer belonging to the product category "i" is calculated. The purchase trend calculation means 3 assumes the value (Herfindahl-Hirschman index) as the purchase trend index $x_{c,i}$.

In Example 7, the purchase trend calculation means 3 designates the normal distribution, for example, as a type of the distribution of the purchase trend index $x_{c,i}$.

In Example 7, product brand or the like may be applied instead of manufacturer.

In Example 6 and Example 7, the purchase trend calculation means 3 calculates the purchase trend index $x_{c,i}$ per combination of customer and product-related item (product category in the above example).

The grouping means 4 defines groups of customers and groups of products on the basis of each purchase trend index $x_{c,i}$ calculated by the purchase trend calculation means 3 and the designated type of the distribution of the purchase trend indexes $x_{c,i}$. The grouping means 4 may define groups of customers and groups of product-related items (such as product category). In any case, the operations of the grouping means 4 are the same. The following description will be made assuming that the grouping means 4 defines groups of customers and groups of products.

Further, the following description will be made assuming that grouping is performed such that one customer (or one customer ID) belongs to only one group and one product (or one product ID) belongs to only one group. Defining groups such that one element belongs to only one group in this way is called clustering. A group obtained by clustering is called cluster. Simultaneously clustering a plurality of targets (customers and products in the present example) is called Co-clustering. That is, the following description will be made assuming that the grouping means 4 performs Co-clustering.

Fig. 2 is a diagram schematically illustrating customer ID and product ID before Co-clustering is performed. The example in Fig. 2 illustrates that customer IDs are arranged in turn in the vertical axis direction and product IDs are arranged in turn in the horizontal axis direction. Further, an individual purchase trend index $x_{c,i}$ calculated by the purchase trend calculation means 3 corresponds to a combination of one customer ID and one product ID, respectively. For example, $x_{2,1}$ indicated in Fig. 2 corresponds to a combination of customer ID of "2" and product ID of "1." When a customer has not purchased a product, the purchase trend index $x_{c,i}$ may not be calculated for the combination of the customer and the product.

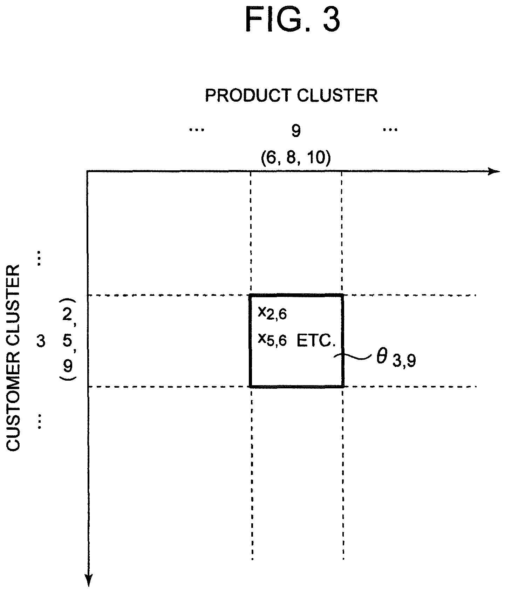

Fig. 3 is an explanatory diagram schematically illustrating examples of a group of customers (customer cluster) and a group of products (product cluster) defined by the grouping means 4. Fig. 3 illustrates only a product cluster with ID of "9" for the product cluster and a customer cluster with ID of "3" for the customer cluster for simplified description. Fig. 3 illustrates one product cluster and one customer cluster, but the grouping means 4 defines a plurality of product clusters and a plurality of customer clusters. The number of product clusters and the number of customer clusters may be defined at fixed values, respectively, or may not be defined at fixed values, respectively. In the following description, when ID of the product cluster is "a," the product cluster is denoted as product cluster "a." Similarly, when ID of the customer cluster is "b," the customer cluster is denoted as customer cluster "b."

The example illustrated in Fig. 3 assumes that the products "6," "8," and "10" belong to the product cluster "9" defined by the grouping means 4. Further, it is assumed that the customers "2," "5," and "9" belong to the customer cluster "3" defined by the grouping means 4. The number of products (product IDs) belonging to a product cluster and the number of customers (customer IDs) belonging to a customer cluster are not particularly limited.

A combination of one product cluster and one customer cluster is associated with the purchase trend index $x_{c, i}$ depending on a combination of product belonging to the product cluster and customer belonging to the customer cluster. For example, in the example illustrated in Fig. 3, $x_{2, 6}$, $x_{5, 6}$, and the like correspond to a combination of product cluster "9" and customer cluster "3." When each product cluster and each customer cluster are defined, a parameter of the distribution of the purchase trend index $x_{c, i}$ of the designated type of the distribution is also defined per combination of one product cluster and one customer cluster. For example, a distribution parameter such as $x_{2, 6}$ or $x_{5, 6}$ corresponding to a combination of product cluster "9" and customer cluster "3" is defined. In Fig. 3, a parameter corresponding to the combination of product cluster "9" and customer cluster "3" is denoted as $\theta_{3, 9}$. An exemplary distribution parameter of $x_{c, i}$ may be an average value or variance, for example. Further, $\theta_{3, 9}$ and the like may be expressed as a vector having the elements of average value or variance, for example.

Fig. 3 may be modified Fig. 2 in that the product IDs belonging to the same product cluster are continuously arranged and the customer IDs belonging to the same customer cluster are continuously arranged.

The grouping means 4 defines each customer cluster and each product cluster such that a likelihood of a plurality of combinations obtained by combining a customer cluster (a group of a customer), a product cluster (a group of a product), and a parameter of a distribution of the purchase trend index $x_{c, i}$ is maximum. The likelihood is expressed in the following Equation (5). Alternatively, the grouping means 4 may obtain a customer cluster and a product cluster by performing a processing of maximizing the lower limit of a marginal likelihood marginalizing $\theta$ in Equation (5), or its similar processing.

[Math. 1]

$$\prod_{c \in C, \ i = I} p\left(x_{c, i} \mid \theta, Z_c, Z_i\right)$$

Equation (5)

In Equation (5), C indicates a set of customer IDs, and I indicates a set of product IDs. In other words, C is a set of customers and I is a set of products. $Z_c$ indicates a customer cluster to which the customer ID of "c" belongs. $Z_i$ indicates a product cluster to which the product ID of "i" belongs. In the present example, the grouping means 4 performs Co-clustering such that one customer ID belongs to only one customer cluster and one product ID belongs to only one product cluster. In this case, $Z_c$ may indicate ID of the customer cluster and $Z_i$ may indicate ID of the product cluster, such as $Z_c = 2$ and $Z_i = 3$. For example, $Z_c$ may be denoted by a vector assuming only the elements corresponding to ID of the customer cluster as 1 and other elements as 0, and $Z_i$ may be denoted by a vector assuming only the elements corresponding to ID of the product cluster as 1 and other elements as 0. For example, when the customer ID of "4" belongs to the customer cluster "2," the case may be denoted as $Z_c = (0, 1, 0, 0, 0, \cdots)^T$ by a vector assuming only the second element as 1 and other elements as 0. In the present example, the subscript c in $Z_c$ is specifically 4. Similarly, for example, when the product ID of "7" belongs to the product cluster "3," the case may be denoted as $Z_i = (0, 0, 1, 0, 0, \cdots)^T$ by a vector assuming only the third element as 1 and other elements as 0. In the present example, the subscript i in $Z_i$ is specifically 7.

In Equation (5), $\theta$ is a parameter of a distribution designated by the purchase trend calculation means 3. $\theta$ is a parameter of the distribution of $x_{c, i}$ corresponding to a combination of one customer cluster indicated by $Z_c$ and one product cluster indicated by $Z_i$. For example, when $Z_c$ indicates the customer cluster "3" illustrated in Fig. 3 and $Z_i$ indicates the product cluster "9" illustrated in Fig. 3, $\theta_{3, 9}$ corresponds to $\theta$ corresponding to the combination of $Z_c$ and $Z_i$.

In Equation (5), $p(x_{c, i} | \theta, Z_c, Z_i)$ indicates a probability of $x_{c, i}$.

The value of Equation (5) may be a likelihood for the total combinations obtained by combining a customer cluster, a product cluster, and a distribution parameter of $x_{c,i}$ corresponding to the two clusters.

When making maximum likelihood estimation, the grouping means 4 may define customer clusters and product clusters by defining a plurality of combinations of customer cluster, product cluster, and parameter such that the value of Equation (5) is maximum. When making Bayesian estimation, the grouping means 4 calculates a posterior distribution of $\theta$ indicated in Equation (5).

At this time, the grouping means 4 may define a plurality of combinations of customer cluster, product cluster, and parameter by use of the EM (Expectation-Maximization) method such that the value of Equation (5) is maximum for maximum likelihood estimation, for example. The grouping means 4 finds a posterior distribution of parameters by use of the variational Bayesian method for Bayesian estimation. Alternatively, the grouping means 4 may use the Gibbs sampling method. The Gibbs sampling method is one of the MCMC (Markov Chain Monte Carlo algorithm) methods.

The purchase trend calculation means 3 and the grouping means 4 are realized by CPU in a computer, for example. In this case, the CPU may read a grouping program from a program recording medium such as program storage device (not illustrated in Fig. 1) in the computer, and may operate as the purchase trend calculation means 3 and the grouping means 4 according to the grouping program. Further, each means may be realized in different hardware.

Further, the grouping system may be configured such that two or more physically-separated devices are connected in a wired or wireless manner. This point is applicable to the exemplary embodiment described below.

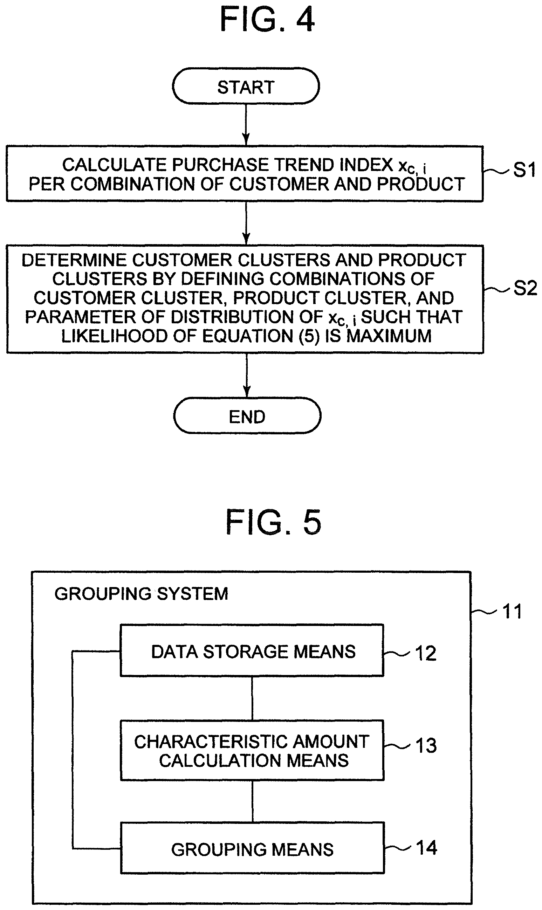

The processing progress will be described below. Fig. 4 is a flowchart illustrating an exemplary processing progress according to the first exemplary embodiment of the present invention.

The purchase trend calculation means 3 calculates the purchase trend index $x_{c,i}$ per combination of customer and product on the basis of the purchase data (step S1). In step S1, the purchase trend calculation means 3 designates a type of the distribution of the purchase trend indexes $x_{c,i}$.

The exemplary operations of the purchase trend calculation means 3 have been already described in Example 1 to Example 7, and thus the description thereof will be omitted.

After step S1, the grouping means 4 defines a plurality of combinations of customer cluster, product cluster and distribution parameter of $x_{c,i}$ such that the value of Equation (5) is maximum, thereby determining customer clusters and product clusters (step S2). The distribution is designated by the purchase trend calculation means 3.

According to the present exemplary embodiment, unlike the technique described in NPL1 and the like, a property is not given to a product by a person. $x_{c,i}$ obtained in step S1 is objective data obtained from the purchase data. The grouping means 4 defines groups of customers and groups of products (customer clusters and product clusters in the above example) by use of the data, thereby defining groups of customers with similar purchase trends with high accuracy and defining groups of similar products in terms of purchase trends with high accuracy.

When the purchase trend calculation means 3 calculates the purchase trend index $x_{c,i}$ as indicated in Example 6 and example 7, the grouping means 4 may define customer clusters and product category (product-related items) clusters such that the value of Equation (5) is maximum. In this case, the grouping means 4 may perform Co-clustering by use of ID of the product category as "i" in Equation (5) instead of product ID in step S2. Other points are similar to the operations of the grouping means 4 previously described. In this case, it is possible to define groups of customers with similar purchase trends with high accuracy and to define groups of similar product categories in terms of purchase trends with high accuracy

According to the first exemplary embodiment, the grouping means 4 may define groups of customers and groups of products while allowing one customer (customer ID) to belong to a plurality of groups and one product (product ID) to belong to a plurality of groups. Also in this case, the grouping means 4 may define groups of customers and groups of products such that the value of Equation (5) is maximum. Also in this case, the grouping means 4 may employ the Gibbs sampling method, the EM method, or the variational Bayesian method as a method for defining groups of customers and groups of products such that the value of Equation (5) is maximum. It is similarly applicable to defining groups of product-related items such as product category.

It is assumed that the grouping means 4 defines groups of customers and groups of products while allowing one customer (customer ID) to belong to a plurality of groups and one product (product ID) to belong to a plurality of groups. In this case, a data analyst can find the hidden properties (properties which are difficult to directly find) of customers or products with reference to the groups of customers and the groups of products. For example, a hidden property of a product is denoted as $Z_i = (0, 0, 1, 0, 1, \cdots)^T$ and a hidden property of a customer is denoted as $Z_c = (1, 0, 0, 1, 0, \cdots)^T$. Assuming the properties Ki and Kc, a weighting matrix A of Ki $\times$ Kc is learned as a parameter. The purchase trend index $x_{c,i}$ of the customer c for the product i is modeled as $f(Z^T_i A Z_c)$ by use of a function f. The function f is the logistic function, the Poisson distribution, the Gaussian distribution, or the like. Which of them the function f employs may be defined by the purchase trend index $x_{c,i}$. When the purchase trend index $x_{c,i}$ takes a value of 0 or 1, the function f is the logistic function. When the purchase trend index $x_{c,i}$ indicates the number of products, the function f is the Poisson distribution. When the purchase trend index $x_{c,i}$ is a real number, the function f is the Gaussian distribution. The probability distribution illustrated as a specific example according to the exemplary embodiment corresponds to the function.

The first exemplary embodiment has been described assuming that the purchase trend calculation means 3 designates a type of the distribution of the purchase trend index $x_{c, i}$. A type of the distribution of the purchase trend indexes $x_{c,i}$ may be previously defined depending on a value used as the purchase trend index $x_{c, i}$. In this case, the purchase trend calculation means 3 may not designate a type of the distribution of the purchase trend index $x_{c, i}$. The grouping means 4 may define groups of customers and groups of products or product-related items by use of a parameter of the distribution of the purchase trend index $x_{c, i}$ of the predefined type of the distribution.

Second exemplary embodiment

Fig. 5 is a block diagram illustrating an exemplary grouping system according to a second exemplary embodiment of the present invention. A grouping system 11 according to the second exemplary embodiment includes a data storage means 12, a characteristic amount calculation means 13, and a grouping means 14.
The data storage means 12 is a storage device for storing purchase data indicating customers' product purchase situations. For example, information in which customer ID, product ID, product price, and purchase date are associated on each purchase date when the customer purchases the product may be stored as the purchase data together with customer master and product master. The following description will be made assuming that the characteristic amount calculation means 13 calculates a product relative price as the characteristic amount of the product by use of a standard price in the product master. The following examples assume that the purchase number is used as an index indicating product purchase performance (which will be denoted as purchase performance index below).
The characteristic amount calculation means 13 calculates the characteristic amount of a product per product. The characteristic amount is the characteristic amount of a product itself, and does not depend on a customer. The present example will be described assuming that the characteristic amount calculation means 13 calculates a relative price of each product as the characteristic amount of the product. In this case, the characteristic amount calculation means 13 calculates an average value of the standard price of each product (which will be denoted as $i_{av}$ below) and a standard deviation of the standard price (which will be denoted as $i_{dev}$ below) on the basis of the standard price of each product stored in the data storage means 12. A standard price of a product "i" stored in the data storage means 12 is assumed as $s_i$. A relative price of the product "i" is assumed as $r_i$. The characteristic amount calculation means 13 calculates a relative price of an individual product by calculating the following Equation (6) per product.

$$r_i = (s_i - i_{av})/i_{dev} \qquad \text{Equation (6)}$$

The characteristic amount calculation means 13 designates a type of a distribution of the characteristic amount of a product. When calculating a relative price as the characteristic amount, the characteristic amount calculation means 13 designates the standard normal distribution, for example, as a type of the distribution of the characteristic amount (relative price). Alternatively, the characteristic amount calculation means 13 may designate the Gaussian distribution.
The grouping means 14 calculates a purchase performance index per combination of customer and product with reference to the purchase data stored in the data storage means 12. According to the present exemplary embodiment, the purchase performance index calculated per combination of customer and product is denoted by sign $u_{c, i}$. The present example will be described assuming that the number of purchased products is used as the purchase performance index, and thus the purchase number is also denoted by sign $u_{c, i}$. For example, when the number of purchased products "3" by a customer "2" is 7, $u_{2, 3} = 7$ is established. Therefore, the grouping means 14 derives the purchase number $u_{c, i}$ per combination of customer and product.
Further, the grouping means 14 employs the Poisson distribution as a distribution of the purchase performance index (the purchase number).
The grouping means 14 then defines groups of customers and groups of products on the basis of the purchase number derived per combination of customer and product, the type of the distribution of the purchase number (the Poisson distribution in the present example), the relative price per product, and the type of the distribution of the relative price.
The following description will be made assuming that the grouping means 14 performs Co-clustering such that one customer (or one customer ID) belongs to only one cluster and one product (or one product ID) belongs to only one cluster.
The grouping means 14 defines each customer cluster and each product cluster such that a likelihood of a plurality of combinations obtained by combining a customer cluster, a product cluster, a parameter of a distribution of the purchase number, and a parameter of a distribution of a relative price of the product is maximum. The likelihood is expressed in the following Equation (7).
[Math. 2]

$$\prod_{c \in C,\ i \in I} p\left(u_{c,\,i} \mid \theta',\ Z_c,\ Z_i\right) \prod_{i \in I} p\left(r_i \mid \phi,\ Z_i\right)$$

Equation (7)

In Equation (7), C indicates a set of customer IDs, and I indicates a set of product IDs. $Z_c$ indicates a customer cluster to which customer ID of "c" belongs. $Z_i$ indicates a product cluster to which product ID of "i" belongs. This point is the same as in the first exemplary embodiment.

In Equation (7), $\theta'$ indicates a parameter of the distribution of the purchase number $u_{c,\,i}$ corresponding to a combination of one customer cluster indicated by $Z_c$ and one product cluster indicated by $Z_i$. $\theta'$ may be also denoted by a vector, for example, similarly to $\theta$ according to the first exemplary embodiment.

In Equation (7), $p(u_{c,\,i}|\theta', Z_c, Z_i)$ indicates a probability of $u_{c,\,i}$.

In Equation (7), $\varphi$ is a parameter of a distribution designated by the characteristic amount calculation means 13. $\varphi$ is a parameter of a distribution of a relative price of a product belonging to the product cluster $Z_i$.

In Equation (7), $p(r_i|\varphi, Z_i)$ indicates a probability of $r_i$.

The value of Equation (7) may be a likelihood of the total combinations obtained by combining a customer cluster, a product cluster, a parameter $\theta'$ of a distribution of $u_{c,\,i}$ corresponding to the two clusters, and a parameter $\varphi$ of a distribution of a relative price (the characteristic amount) of a product belonging to the product cluster.

The grouping means 14 may define customer clusters and product clusters by defining a plurality of combinations of customer cluster, product cluster and parameters $\theta'$ and $\varphi$ such that the value of Equation (7) is maximum.

At this time, the grouping means 14 may define a plurality of combinations of customer cluster, product cluster, and parameters $\theta'$ and $\varphi$ by use of the Gibbs sampling method, the EM method, or the variational Bayesian method, for example, such that the value of Equation (7) is maximum.

The characteristic amount calculation means 13 and the grouping means 14 are realized by CPU in a computer, for example. In this case, the CPU may read a grouping program from a program recording medium such as program storage device (not illustrated in Fig. 5) in the computer, and may operate as the characteristic amount calculation means 13 and the grouping means 14 according to the grouping program. Further, each means may be realized in different hardware.

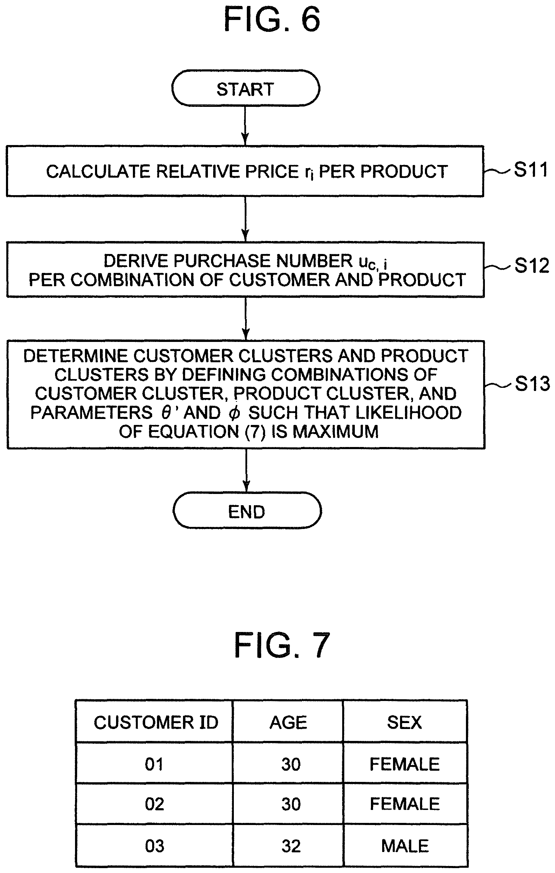

The processing progress will be described below. Fig. 6 is a flowchart illustrating an exemplary processing progress according to the second exemplary embodiment of the present invention.

The characteristic amount calculation means 13 calculates a relative price $r_i$ of a product per product on the basis of the product master, for example (step S11). The characteristic amount calculation means 13 may calculate a relative price of an individual product by calculating Equation (6) per product. In step S11, the characteristic amount calculation means 13 designates a type of the distribution of the relative price $r_i$.

The grouping means 14 derives the number of products purchased by a customer (the purchased number $u_{c,\,i}$) per combination of customer and product with reference to the purchase data (step S 12). The purchase number $u_{c,\,i}$ per combination of customer and product may be stored in the data storage means 12. In this case, the grouping means 14 may read the purchase number $u_{c,\,i}$ from the data storage means 12.

Then, the grouping means 14 may define customer clusters and product clusters by defining a plurality of combinations of customer cluster, product cluster, and parameters $\theta'$, $\varphi$ such that the value of Equation (7) is maximum (step S13).

Also according to the present exemplary embodiment, a person does not give any property to a product unlike the technique described in NPL 1 and the like. $r_i$ and $u_{c,\,i}$ according to the present exemplary embodiment are objective data acquired from the product master or the purchase data. The grouping means 14 defines customer clusters and product clusters by use of such data. Therefore, it is possible to define groups of customers with similar purchase trends with high accuracy and to define groups of similar products in terms of purchase trends with high accuracy.

The grouping means 14 may define groups of customers and groups of products while allowing one customer (customer ID) to belong to a plurality of groups and one product (product ID) to belong to a plurality of groups. Also in this case, the grouping means 14 may define customer clusters and product clusters by defining a plurality of combinations of customer cluster, product cluster and parameters $\theta'$, $\varphi$ such that the value of Equation (7) is maximum. Also in this case, the grouping means 14 may employ the Gibbs sampling method, the EM method, or the variational Bayesian method as a method for defining groups of customers and groups of products such that the value of Equation (7) is maximum.

It is assumed that the grouping means 14 defines groups of customers and groups of products while allowing one customer (customer ID) to belong to a plurality of groups and one product (product ID) to belong to a plurality of groups. In this case, the data analysist can find the hidden properties (properties which are difficult to directly find) of the customers or products with reference to the groups of customers and the groups of products.

The second exemplary embodiment has been described assuming that the characteristic amount calculation means 13 designates a type of a distribution of the characteristic amounts of the products. A type of the distribution of the characteristic amounts of the products may be defined depending on a value used as the characteristic amount of a product. In this case, the characteristic amount calculation means 13 may not designate a type of the distribution of the characteristic amounts of the products. Then, the grouping means 14 may define groups of customers and groups of products by use of the parameters of the distribution of the characteristic amounts of the products with the predefined type of the distribution.

Specific examples of customer master, product master and purchase data, specific examples of the characteristic amount according to the second exemplary embodiment, and specific examples of the purchase trend index $x_{c,i}$ according to the first exemplary embodiment will be described below

Fig. 7 is a schematic diagram illustrating exemplary customer master stored in the data storage means 2 according to the first exemplary embodiment or the data storage means 12 according to the second exemplary embodiment. Fig. 7 illustrates that customer ID, customer's age and sex are associated per customer ID.

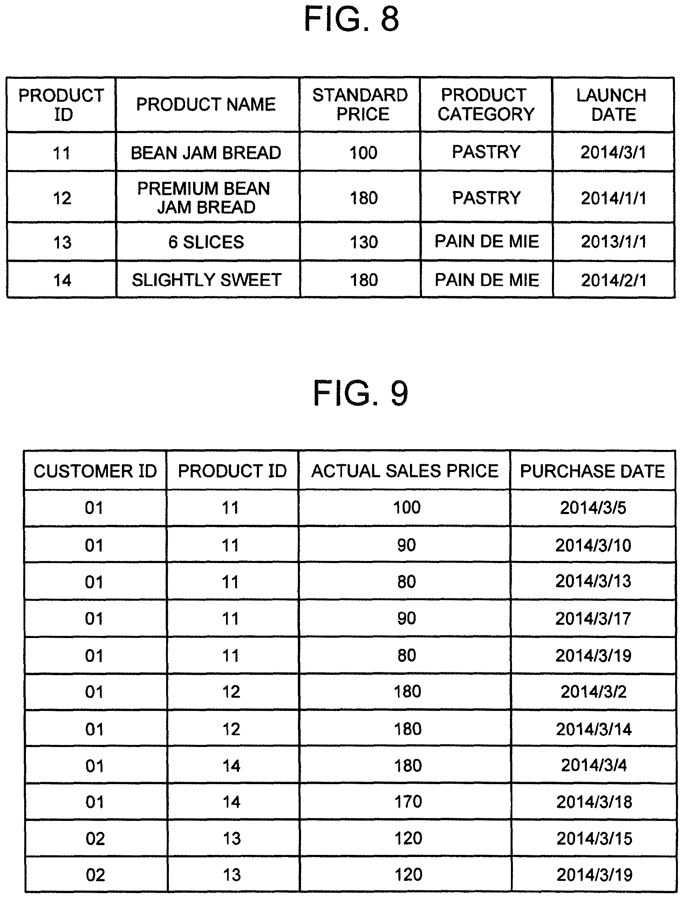

Fig. 8 is a schematic diagram illustrating exemplary product master stored in the data storage means 2 according to the first exemplary embodiment or the data storage means 12 according to the second exemplary embodiment. Fig. 8 illustrates that product ID, product name, standard price, product category and launch date are associated per product ID.

Fig. 9 is a schematic diagram illustrating exemplary purchase data stored in the data storage means 2 according to the first exemplary embodiment or the data storage means 12 according to the second exemplary embodiment. Fig. 9 illustrates that customer ID, product ID, actual product sales price, and purchase date are associated on each purchase date when a customer purchases a product. One row of data illustrated in Fig. 9 indicates that a customer purchases one product.

Fig. 7 to Fig. 9 illustrate exemplary data stored in the data storage means 2 or 12. The specific numerical values indicated in each specific example described below are not necessarily based on the data illustrated in Fig. 7 to Fig. 9.

(Specific example 1)

Specific example 1 described below is a specific example of the characteristic amount of a product according to the second exemplary embodiment. The characteristic amount calculation means 13 calculates the characteristic amount of each product in a category per product category. The present example assumes that the characteristic amount calculation means 13 calculates a relative price as the characteristic amount of a product.

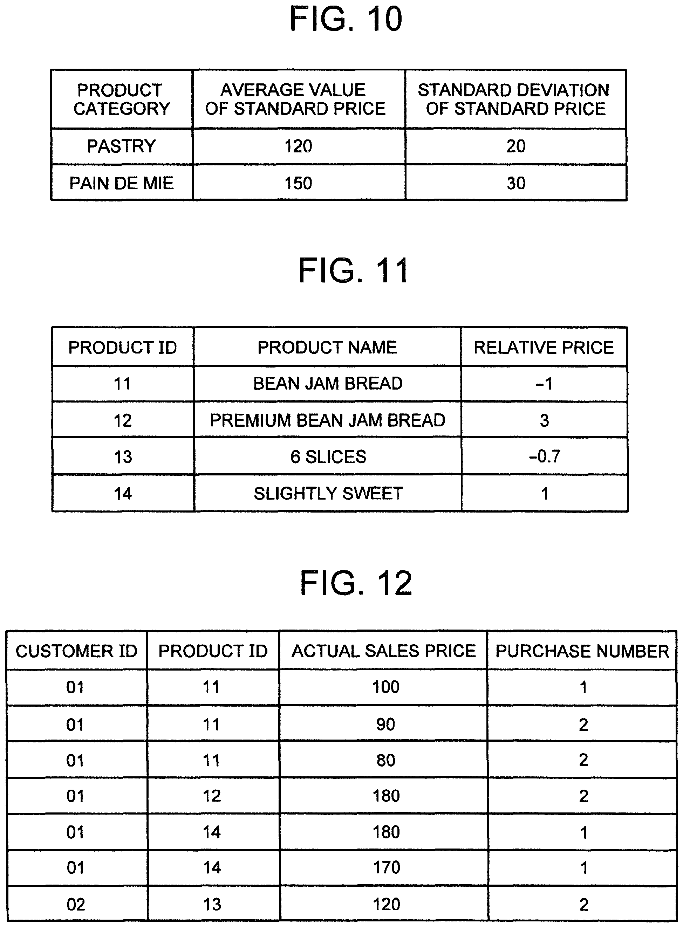

The characteristic amount calculation means 13 selects one product category, and calculates an average value $i_{av}$ of a standard price of each product in the selected product category, and a standard deviation $i_{dev}$ of the standard price of each product. Fig. 10 illustrates the exemplary average values and standard deviations calculated for two product categories of "pastry" and "pain de mie."

The characteristic amount calculation means 13 further selects one product category, and calculates a relative price $r_i$ of an individual product in the selected product category in Equation (6) described above. Herein, $i_{av}$ and $i_{dev}$ in calculation of Equation (6) are an average value $i_{av}$ and a standard deviation $i_{dev}$ calculated for the selected product category, respectively.

Consequently, a relative price is acquired per product. Fig. 11 is a diagram illustrating a relative prices calculated per product by way of example. Fig. 11 illustrates a product name and a relative price per product ID by way of example.

The characteristic amount calculation means 13 designates the Gaussian distribution, for example, as a type of the distribution of the relative price $r_i$ calculated as described above. Alternatively, the characteristic amount calculation means 13 may designate the standard normal distribution as a type of the distribution of the relative price $r_i$.

The grouping means 14 calculates the number of products purchased by a customer (the purchase number) per combination of customer ID and product ID with reference to the purchase data and assumes the purchase number as the purchase performance index $u_{c,i}$. Further, the grouping means 14 employs the Poisson distribution as a distribution of the purchase performance index $u_{c,i}$ (the purchase number $u_{c,i}$ below).

The grouping means 14 groups the customer IDs and the product IDs on the basis of the relative price $r_i$ of each product and the type of its distribution as well as the purchase number $u_{c,i}$ derived per combination of customer ID and product ID and the type of its distribution. The processing has been already described, and thus the description thereof will be omitted.

(Specific example 2)

Specific example 2 is a specific example of Example 1 described according to the first exemplary embodiment. The purchase trend calculation means 3 specifies the purchase number (the purchase amount) per actual product sales price for a combination of customer ID and product ID on the basis of the purchase data. Consequently, as illustrated in Fig. 12, information in which the purchase number is associated with a combination of customer ID, product ID, and actual product sales price is acquired.

The purchase trend calculation means 3 makes regression analysis with objective variable of $\ln(\text{volume}^{c,i})$ and explanatory variable of $\ln(\text{price}^{c,i})$. $\text{volume}^{c,i}$ is a purchase amount variable, and $\text{price}^{c,i}$ is a price variable. When regression analysis is made on a combination of customer ID of "01" and product ID of "11," the value of the coefficient $w^{c,i}$ in Equation (1) is -3 and the price elasticity is 3. The purchase trend calculation means 3 assumes the price elasticity of "3" as the purchase trend index $x_{01,11}$. The purchase trend calculation means 3 similarly calculates the purchase trend index $x_{c,i}$ for other combinations of customer ID and product ID.

The price elasticity of "3" means that the purchase number increases by $10 \times 3 = 30\%$ when the price decreases by 10%.

In the present example, the purchase trend calculation means 3 designates the normal distribution, for example, as a type of the distribution of the purchase trend index $x_{c,i}$.

The grouping means 4 groups the customer IDs and the product IDs on the basis of the purchase trend index $x_{c,i}$ and the type of its distribution. The processing has been already described and thus the description thereof will be omitted. This point is applicable to other specific examples described below.

(Specific example 3)

Specific example 3 is a specific example of Example 2 described according to the first exemplary embodiment.

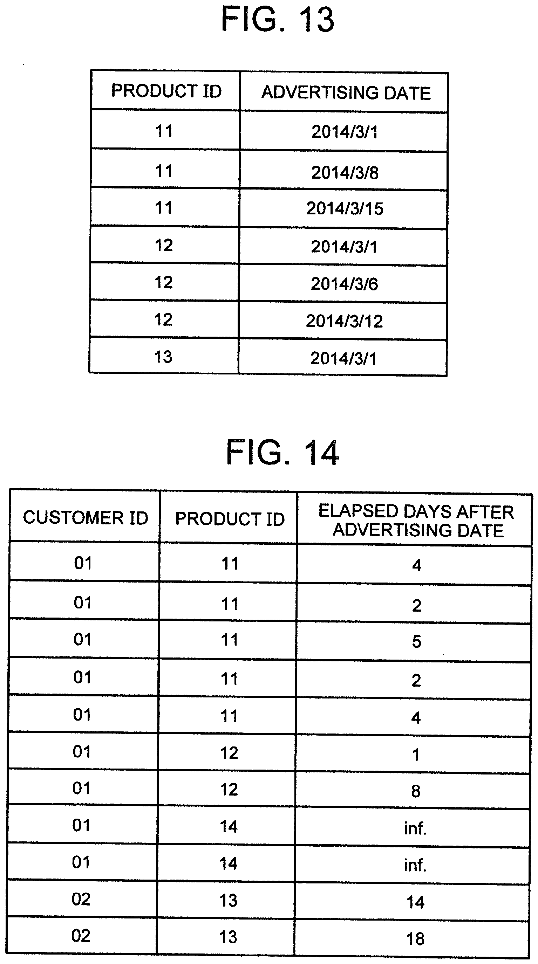

In the present example, information in which product ID is associated with advertising date of the product per date when the product is advertised is stored in the data storage means 2. Fig. 13 is a diagram illustrating exemplary information in which product ID is associated with advertising date. Advertisement may be a commercial message in TV broadcasting or radio broadcasting. Further, the information illustrated in Fig. 13 may reflect the performance of the advertisement collectively broadcasted in associated with a program, or the like. Further, the information illustrated in Fig. 13 may be created on the basis of the advertisement (such as online advertisement) individually made per customer.

The purchase trend calculation means 3 creates information in which customer ID, product ID and elapsed days after the latest advertising date of the product are associated on each purchase date when the customer purchases the product on the basis of the purchase data. Fig. 14 illustrates exemplary information in which customer ID, product ID, and elapsed days after advertising date are associated.

The purchase trend calculation means 3 may assume the elapsed days after advertising date at a sufficiently-high value or missing value for a product which is purchased without advertisement performance. "inf" indicated in Fig. 14 means a sufficiently-high value.

The purchase trend calculation means 3 calculates a product advertisement effective life $T_{c,i}$ for a customer per combination of customer "c" and product "i." There are a system assuming that the purchase number is proportional to $\exp(-\text{day}^{c,i}/T_{c,i})$ at elapsed days after advertising date $\text{day}^{c,i}$ for a combination of customer "c" and product "i" and a system assuming that a probability at which a customer "c" purchases a product "i" at elapsed days after advertising date $\text{day}^{c,i}$ is proportional to $\exp(-\text{day}^{c,i}/T_{c,i})$. The former system will be described herein. The purchase trend calculation means 3 makes regression analysis with objective variable of $\ln(\text{volume}^{c,i})$ and explanatory variable of $\ln(\text{day}^{c,i})$. $\text{volume}^{c,i}$ is a purchase amount variable and $\text{day}^{c,i}$ is an elapsed days variable. When regression analysis is made for a combination of customer ID of "01" and product ID of "11," the value of the coefficient $w^{c,i}$ in Equation (2) is -0.2. The purchase trend calculation means 3 calculates $T_{01,11} = 5$ as the reciprocal of the absolute value of the value, and assumes the value as the purchase trend index $x_{01,11}$. The purchase trend calculation means 3 similarly calculates the purchase trend index $x_{c,i}$ also for other combinations of customer ID and product ID.

In the present example, the purchase trend calculation means 3 designates the normal distribution, for example, as a type of the distribution of the purchase trend index $x_{c,i}$.

In specific example 3, a date when a product is on display in a shop may be employed instead of advertising date. In this case, the purchase trend calculation means 3 may use elapsed days after product display date instead of elapsed days after advertising date. Further, in this case, the purchase trend calculation means 3 may designate the normal distribution or the Poisson distribution, for example, as a type of the distribution of the purchase trend index $x_{c,i}$.

(Specific example 4)

Specific example 4 demonstrates that the purchase trend index $x_{c,i}$ is found by use of elapsed days after launch date of a product.

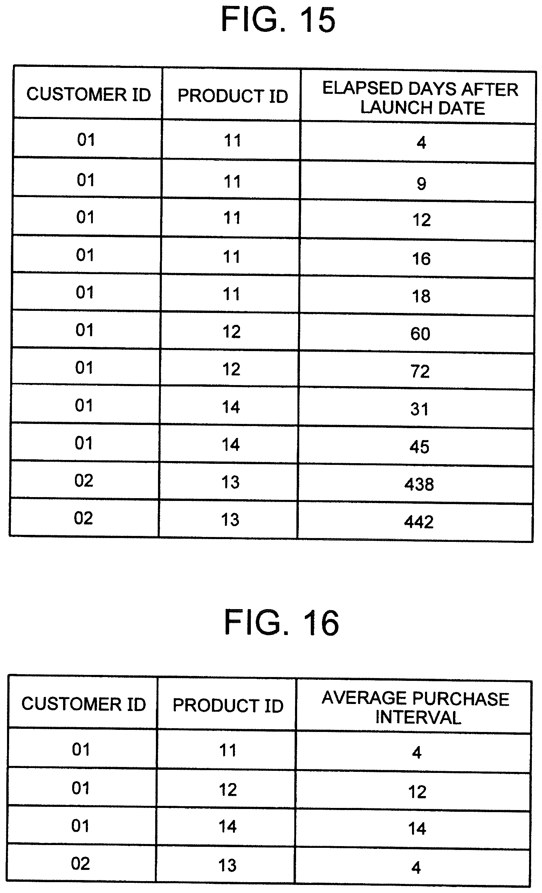

The purchase trend calculation means 3 creates information in which customer ID, product ID, and elapsed days after launch date of the product are associated on each purchase date when the customer purchases the product on the basis of the purchase data, for example. Fig. 15 illustrates exemplary information in which customer ID, product ID, and elapsed days after launch date are associated.

The purchase trend calculation means 3 calculates the new product sensitivity life $T_{c, i}$ of a product for a customer per combination of customer "c" and product "i." It is assumed here that a probability at which a customer "c" purchases a product "i" is proportional to $\exp(-day^{c, i}/T^{c, i})$ at elapsed days $day^{c, i}$ after product launch date for a combination of customer "c" and product "i". The purchase trend calculation means 3 can find the new product sensitivity life $T_{01, 11}$ with a maximum likelihood of the sensitivity of customer "01" for product "11" similarly to the advertisement effective life $T_{01, 11}$ in the above specific examples. The purchase trend calculation means 3 assumes the new product sensitivity life $T_{01, 11}$ as the purchase trend index $x_{01, 11}$ for a combination of customer ID of "01" and product ID of "11." The purchase trend calculation means 3 similarly calculates the purchase trend index $x_{c, i}$ for other combinations of customer ID and product ID.

In the present example, the purchase trend calculation means 3 designates the Poisson distribution, for example, as a type of the distribution of the purchase trend index $x_{c, i}$. Alternatively, the purchase trend calculation means 3 may designate the normal distribution.

(Specific example 5)

Specific example 5 is a specific example of Example 5 described according to the first exemplary embodiment.

The purchase trend calculation means 3 calculates elapsed days after a customer "c" purchases a product "i" and until the same customer "c" purchases the same product "i", and calculates an average value of the elapsed days (average purchase interval) as the purchase trend index $x_{c, i}$. The average purchase interval corresponds to an optimum parameter of the distribution when the purchase intervals accords to the Poisson distribution.

The purchase trend calculation means 3 calculates the average purchase interval (the purchase trend index $x_{c, i}$) per combination of customer ID and product ID. The purchase trend calculation means 3 then creates information in which customer ID, product ID, and average purchase interval are associated. Fig. 16 illustrates exemplary information in which customer ID, product ID, and average purchase interval are associated.

In the present example, the purchase trend calculation means 3 designates the normal distribution, for example, as a type of the distribution of the purchase trend index $x_{c, i}$.

(Specific example 6)

Specific example 6 is a specific example of Example 6 described according to the first exemplary embodiment.

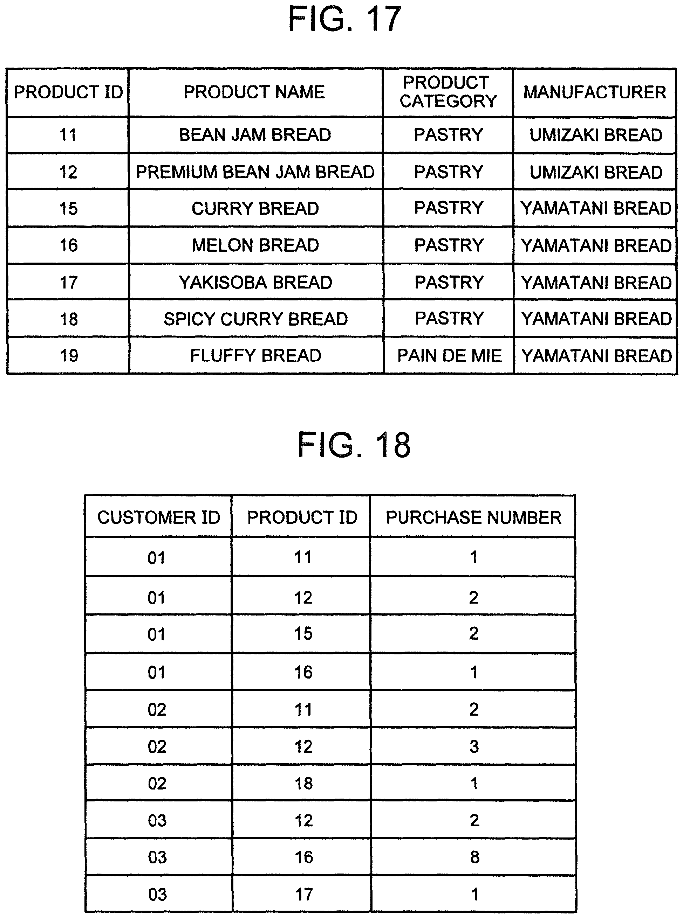

The present example assumes that the product master illustrated in Fig. 17 is stored in the data storage means 2 (see Fig. 1). In the product master illustrated in Fig. 17, product ID, product name, product category, and product manufacturer are associated per product ID.

The present example assumes that the purchase data illustrated in Fig. 18 is stored in the data storage means 2 (see Fig. 1). In the purchase data illustrated in Fig. 18, a combination of customer ID and product ID is associated with the number of products which are identified by the product ID and purchased by the customer identified by the customer ID (the purchase number).

The purchase trend calculation means 3 calculates a degree of persistence (a degree of attachment) of a customer for an individual product in a product category per combination of customer and product category. The present example demonstrates that the purchase trend calculation means 3 calculates the Herfindahl-Hirschman index as the degree of persistence and assumes the value as the purchase trend index $x_{c, i}$.

For example, the description will be made assuming that the purchase trend calculation means 3 calculates the degree of persistence for a combination of customer ID of "01" and product category of "pastry." As can be seen from Fig. 17 and Fig. 18, the customer "01" purchases one bean jam bread (product ID of "11"), two premium bean jam breads (product ID of "12"), two curry breads (product ID of "15"), and one melon bread (product ID of "16") as the products belonging to the product category of "pastry" Thus, the purchase shares of bean jam bread, premium bean jam bread, curry bread and melon bread belonging to "pastry" by the customer "01" are "1/6," "1/3," "1/3," and "1/6," respectively. Therefore, the purchase trend calculation means 3 calculates the degree of persistence in the combination of customer ID of "01" and product category of "pastry" (the Herfindahl-Hirschman index in the present example) to be 0.28 in the following calculation.

$$0.28 = (1/6)^2 + (1/3)^2 + (1/3)^2 + (1/6)^2$$

Similarly, the description will be made assuming that the purchase trend calculation means 3 calculates the degree of persistence for a combination of customer ID of "02" and product category of "pastry." The customer "02" purchases two bean jam breads (product ID of "11 "), three premium bean jam breads (product ID of "12"), and one spicy curry bread (product ID of "18") as the products belonging to the product category of "pastry" (see Fig. 17 and Fig. 18). Thus, the purchase shares of bean jam bread, premium bean jam bread, and spicy curry bread belonging to "pastry" by the customer "02" are "1/3," "1/2," and "1/6," respectively. Therefore, the purchase trend calculation means 3 calculates the degree of persistence in the combination of customer ID of "02" and product category of "pastry" to be 0.39 in the following calculation.

$$0.39 = (1/3)^2 + (1/2)^2 + (1/6)^2$$

Similarly, the description will be made assuming that the purchase trend calculation means 3 calculates the degree of persistence for a combination of customer ID of "03" and product category of "pastry." The customer "03" purchases two premium bean jam breads (product ID of "12"), eight melon breads (product ID of "16"), and one yakisoba bread (product ID of "17") as the products belonging to the product category of "pastry" (see Fig. 17 and Fig. 18). Thus, the purchase shares of premium bean jam bread, melon bread and yakisoba bread belonging to the product category of "pastry" by the customer "03" are "2/11," "8/11," and "1/11," respectively. Therefore, the purchase trend calculation means 3 calculates the degree of persistence in the combination of customer ID of "03" and product category of "pastry" to be 0.57 in the following calculation.

$$0.57 = (2/11)^2 + (8/11)^2 + (1/11)^2$$

The purchase trend calculation means 3 designates the normal distribution, for example, as a type of the distribution of the purchase trend index $x_{c, i}$.

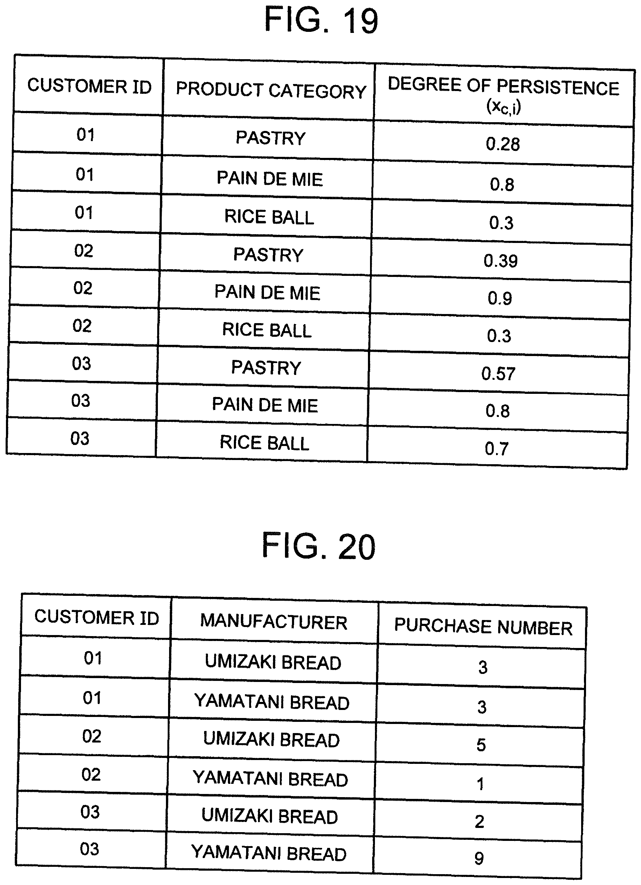

Fig. 19 is a diagram illustrating an exemplary degree of persistence ($x_{c, i}$) per combination of customer ID and product category. For example, it is assumed that the results illustrated in Fig 19 are obtained. In this case, it is assumed that the grouping means 4 groups the customer ID of "01" and the customer ID of "02" into the same customer group (A) and groups the customer ID of "03" into a different customer group (B). It is further assumed that "pastry" and "rice ball" are grouped into the same product category. With the results obtained by the grouping, it can be analyzed that the customer group A tends to purchase various products in "pastry" and "rice ball" and tends to select "pain de mie" they like. It can be analyzed that the customer group B tends to purchase certain products in "pastry" or "rice ball" not only in "pain de mie."

(Specific example 7)

Specific example 7 is a specific example of Example 7 described according to the first exemplary embodiment.
The purchase trend calculation means 3 calculates a degree of persistence (a degree of attachment) of a customer for a manufacturer of a product in a product category per combination of customer and product category. The present example demonstrates that the purchase trend calculation means 3 calculates the Herfindahl-Hirschman index as the degree of persistence and assumes the value as the purchase trend index $x_{c, i}$.
The purchase trend calculation means 3 specifies a relationship among customer ID, manufacturer of a pastry purchased by the customer, and the number of purchased pastries of the manufacturer for a product category of "pastry," for example, with reference to the product master and the purchase data. It is then assumed that the results illustrated in Fig. 20 are obtained for the relationship among customer ID, manufacturer of pastry, and the number of purchased pastries of the manufacture.
The customer "01" purchases three pastries at Umizaki bread and three pastries at Yamatani bread in the product category of "pastry" (see Fig. 20). Thus, the purchase share of Umizaki bread and the purchase share of Yamatani bread by the customer "01" are "1/2," and "1/2," respectively, in the product category of "pastry." Thus, the purchase trend calculation means 3 calculates the degree of persistence in the combination of customer ID of "01" and product category of "pastry" (the Herfindahl-Hirschman index in the present example) to be 0.5 in the following calculation.

$$0.5 = (1/2)^2 + (1/2)^2$$

Further, the customer "02" purchases five pastries at Umizaki bread and one pastry at Yamatani bread in the product category of "pastry" (see Fig. 20). Thus, the purchase share of Umizaki bread and the purchase share of Yamatani bread by the customer "02" are "5/6" and "1/6," respectively in the product category of "pastry." Therefore, the purchase trend calculation means 3 calculates the degree of persistence (the Herfindahl-Hirschman index in the present example) in the combination of customer ID of "02" and product category of "pastry" to be 0.72 in the following calculation.

$$0.72 = (5/6)^2 + (1/6)^2$$

Further, the customer "03" purchases two pastries at Umizaki bread and nine pastries at Yamatani bread in the product category of "pastry" (see Fig. 20). Thus, the purchase share of Umizaki bread and the purchase share of Yamatani bread by the customer "03" are "2/11" and "9/11," respectively, in the product category of "pastry" Therefore, the purchase trend calculation means 3 calculates the degree of persistence (the Herfindahl-Hirschman index in the present example) in the combination of customer ID of "03" and product category of "pastry" to be 0.70 in the following calculation.

$$0.70 = (2/11)^2 + (9/11)^2$$

The purchase trend calculation means 3 calculates the degree of persistence ($x_{c,i}$) per combination of customer ID and product category.

The purchase trend calculation means 3 designates the normal distribution, for example, as a type of the distribution of the purchase trend index $x_{c,i}$.

When specific example 7 is applied to a product category of apparel, it is possible to clearly demonstrate customers who purchase products of certain manufacturers for shoes and accessories but do not stick to manufacturers for underwear and socks, customers who purchase products of certain manufacturers for all the product categories, and the like on the basis of the grouping results.

As described above, when the degree of persistence is calculated, product brand or the like may be applied instead of manufacturer.

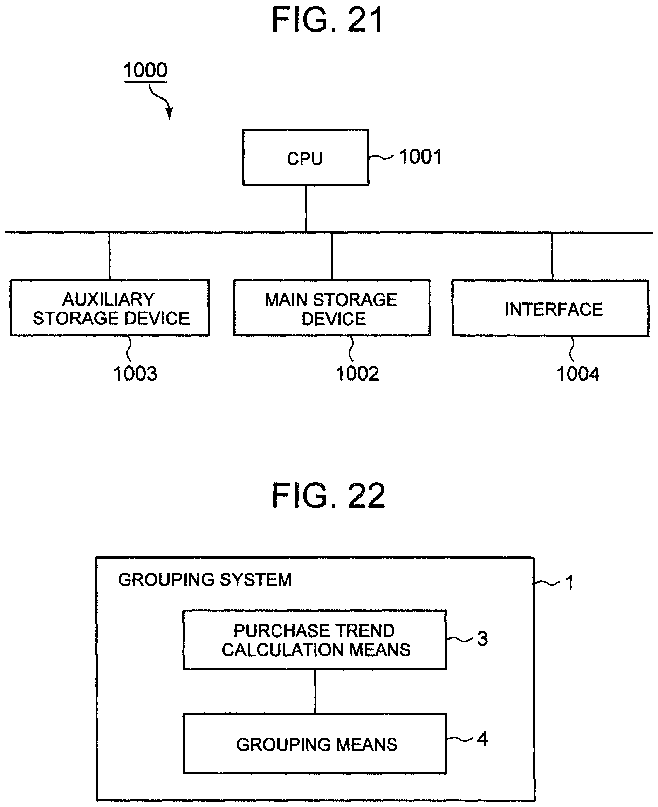

Fig. 21 is a schematic block diagram illustrating an exemplary configuration of a computer according to each exemplary embodiment of the present invention. A computer 1000 includes a CPU 1001, a main storage device 1002, an auxiliary storage device 1003, and an interface 1004.

The grouping system according to each exemplary embodiment is mounted on the computer 1000. The operations of the grouping system are stored in the auxiliary storage device 1003 in the form of program (grouping program). The CPU 1001 reads and develops the program from the auxiliary storage device 1003 into the main storage device 1002, and performs the processings according to the program.

The auxiliary storage device 1003 is an exemplary non-transitory tangible medium. Other exemplary non-transitory tangible mediums are magnetic disc, magnetooptical disc, CD-ROM, DVD-ROM, semiconductor memory, and the like connected via the interface 1004. When the program is distributed to the computer 1000 via a communication line, the computer 1000 as distribution destination may develop the program into the main storage device 1002, and may perform the above processings.

The program may be directed for realizing some of the above processings. Further, the program may be a differential program for realizing the above processings in combination with other program previously stored in the auxiliary storage device 1003.

An outline of the present invention will be described below. Fig. 22 is a block diagram illustrating an exemplary outline of the present invention. The grouping system 1 includes the purchase trend calculation means 3 and the grouping means 4.

The purchase trend calculation means 3 calculates a trend of a customer to purchase a product per combination of customer and product or per combination of customer and product-related item (such as product category) as item related to a product on the basis of customers' product purchase situations. The grouping means 4 defines groups of customers and defines groups of products or groups of product-related items on the basis of the trends and a distribution of the trends.

Specifically, the purchase trend calculation means 3 calculates the purchase trend index as an index indicating a trend of a customer to purchase a product per combination of customer and product or per combination of customer and product-related item as item related to a product on the basis of the purchase data indicating customers' product purchase situations. The grouping means 4 defines groups of customers and defines groups of products or groups of product-related items on the basis of the purchase trend indexes and a parameter of a distribution of the purchase trend indexes.

With the configuration, it is possible to define groups of customers with similar purchase trends with high accuracy and to define groups of similar products or product-related items in terms of purchase trends with high accuracy.

In the example illustrated in Fig. 22, the grouping system 1 may define groups of services or groups of service-related items (such as service category).

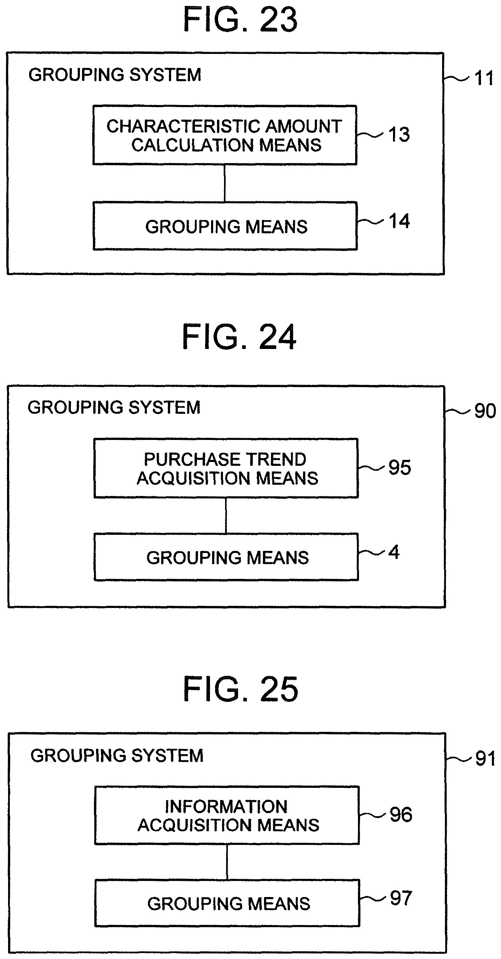

Fig. 23 is a block diagram illustrating other exemplary outline of the present invention. A grouping system 11 includes the characteristic amount calculation means 13 and the grouping means 14.

The characteristic amount calculation means 13 calculates the characteristic amount of a product per product.

The grouping means 14 defines groups of customers and groups of products on the basis of a product purchase performance, a distribution of the product purchase performance, the characteristic amount per product, and a distribution of the characteristic amount which are obtained per combination of customer and product. Specifically, the grouping means 14 defines groups of customers and groups of products on the basis of a purchase performance index as index indicating a product purchase performance, a parameter of a distribution of the purchase performance index, the characteristic amount per product, and a parameter of a distribution of the characteristic amount which are obtained per combination of customer and product.

Also with the configuration, the above effects can be obtained. In the example illustrated in Fig. 23, the grouping system 11 may define groups of services.

Each exemplary embodiment described above may be described as in the following Notes, but is not limited to the following.

(Supplementary note 1)

A grouping system comprising a purchase trend calculation means for calculating a trend of a customer to purchase a product per combination of customer and product or per combination of customer and product-related item as item related to a product on the basis of customers' product purchase situations, and a grouping means for defining groups of customers and defining groups of products or groups of product-related items on the basis of the trends and a distribution of the trends.

(Supplementary note 2)

The grouping system according to note 1, wherein the purchase trend calculation means calculates a purchase trend index as an index indicating a trend of a customer to purchase a product per combination of customer and product or per combination of customer and product-related item as item related to a product on the basis of purchase data indicating customers' product purchase situations, and the grouping means defines groups of customers and defines groups of products or groups of product-related items on the basis of the purchase trend indexes and a parameter of a distribution of the purchase trend indexes.

(Supplementary note 3)

The grouping system according to note 2, wherein the grouping means defines groups of customers and groups of products or groups of product-related items by use of a likelihood of a plurality of combinations obtained by combining a group of a customer, a group of a product or a group of a product-related item, and a parameter of a distribution of a purchase trend index.

(Supplementary note 4)

The grouping system according to note 2 or note 3, wherein the purchase trend calculation means calculates price elasticity as the purchase trend index per combination of customer and product, and the grouping means defines groups of customers and groups of products.

(Supplementary note 5)

The grouping system according to note 2 or note 3, wherein the purchase trend calculation means calculates a value indicating how many days until a customer purchases a product after the advertising date of the product as the purchase trend index per combination of customer and product, and the grouping means defines groups of customers and groups of products.

(Supplementary note 6)

The grouping system according to note 2 or note 3, wherein the purchase trend calculation means calculates a value indicating how many days until a customer purchases a product after the launch date of the product as the purchase trend index per combination of customer and product, and the grouping means defines groups of customers and groups of products.

(Supplementary note 7)

The grouping system according to note 2 or note 3, wherein the purchase trend calculation means calculates a value indicating how many days until a customer purchases a product after the product is on display in a shop as the purchase trend index per combination of customer and product, and the grouping means defines groups of customers and groups of products.

(Supplementary note 8)

The grouping system according to note 2 or note 3, wherein the purchase trend calculation means calculates an average purchase interval as the purchase trend index per combination of customer and product, and the grouping means defines groups of customers and groups of products.

(Supplementary note 9)

The grouping system according to note 2 or note 3, wherein the purchase trend calculation means calculates a degree of persistence of a customer for an individual product in a product category as the purchase trend index per combination of customer and product category, and the grouping means defines groups of customers and defines groups of product categories as groups of product-related items.

(Supplementary note 10)

The grouping system according to note 2 or note 3, wherein the purchase trend calculation means calculates a degree of persistence of a customer for an individual manufacturer of a product in a product category as the purchase trend index per combination of customer and product category, and the grouping means defines groups of customers, and defines groups of product categories as groups of product-related items.

(Supplementary note 11)

The grouping system according to note 2 or note 3, wherein the purchase trend calculation means calculates a degree of persistence of a customer for an individual brand of a product in a product category as the purchase trend index per combination of customer and product category, and the grouping means defines groups of customers, and defines groups of product categories as groups of product-related items.

(Supplementary note 12)

The grouping system according to any one of note 1 to note 8, wherein the grouping means defines groups of customers and groups of products such that one customer belongs to only one group and one product belongs to only one group.

(Supplementary note 13)

The grouping system according to any one of note 1 to note 8, wherein the grouping means defines groups of customers and groups of products while allowing one customer to belong to a plurality of groups and one product to belong to a plurality of groups.

(Supplementary note 14)

The grouping system according to any one of notes 1, 2, 3, 9, 10, and 11, wherein the grouping means defines groups of customers and groups of product-related items such that one customer belongs to only one group and one product-related item belongs to only one group.

(Supplementary note 15)

The grouping system according to any one of notes 1,2,3,9, 10 and 11, wherein the grouping means defines groups of customers and groups of product-related items while allowing one customer to belong to a plurality of groups and one product-related item to belong to a plurality of groups.

(Supplementary note 16)

A grouping system comprising a characteristic amount calculation means for calculating the characteristic amount of a product per product, and a grouping means for defining groups of customers and groups of products on the basis of a product purchase performance obtained per combination of customer and product, a distribution of the product purchase performance, the characteristic amount per product, and a distribution of the characteristic amount.

(Supplementary note 17)

The grouping system according to note 16, wherein the grouping means defines groups of customers and groups of products on the basis of a purchase performance index as an index indicating a product purchase performance obtained per combination of customer and product, a parameter of a distribution of the purchase performance index, the characteristic amount per product, and a parameter of a distribution of the characteristic amount.

(Supplementary note 18)

The grouping system according to note 17, wherein the grouping means defines groups of customers and groups of products by use of a likelihood of a plurality of combinations obtained by combining a group of a customer, a group of a product, a parameter of a distribution of a purchase performance index, and a parameter of a distribution of the characteristic amount of the product.

(Supplementary note 19)

The grouping system according to any one of note 16 to note 18, wherein the characteristic amount calculation means calculates a relative price of a product as the characteristic amount of the product per product.

(Supplementary note 20)

The grouping system according to any one of note 16 to note 19, wherein the grouping means defines groups of customers and groups of products such that one customer belongs to only one group and one product belongs to only one group.

(Supplementary note 21)

The grouping system according to any one of note 16 to note 19, wherein the grouping means defines groups of customers and groups of products while allowing one customer to belong to a plurality of groups and one product to belong to a plurality of groups.

(Supplementary note 22)

A grouping system comprising a purchase trend calculation means for calculating a trend of a customer to purchase a service per combination of customer and service or per combination of customer and service-related item as item related to a service on the basis of customers' service purchase situations, and a grouping means for defining groups of customers and defining groups of services or groups of service-related items on the basis of the trends and a distribution of the trends.

(Supplementary note 23)

A grouping system comprising a characteristic amount calculation means for calculating the characteristic amount of a service per service, and a grouping means for defining groups of customers and groups of services on the basis of a service purchase performance obtained per combination of customer and service, a distribution of the service purchase performance, the characteristic amount per service, and a distribution of the characteristic amount.

(Supplementary note 24)

A grouping method comprising calculating a trend of a customer to purchase a product per combination of customer and product or per combination of customer and product-related item as item related to a product on the basis of customers' product purchase situations, and defining groups of customers and defining groups of products or groups of product-related items on the basis of the trends and a distribution of the trends.

(Supplementary note 25)

A grouping method comprising calculating the characteristic amount of a product per product, and defining groups of customers and groups of products on the basis of a product purchase performance obtained per combination of customer and product, a distribution of the product purchase performance, the characteristic amount per product, and a distribution of the characteristic amount.

(Supplementary note 26)

A grouping method comprising calculating a trend of a customer to purchase a service per combination of customer and service or per combination of customer and service-related item as item related to a service on the basis of customers' service purchase situations, and defining groups of customers and defining groups of services or groups of service-related items on the basis of the trends and a distribution of the trends.

(Supplementary note 27)

A grouping method comprising calculating the characteristic amount of a service per service, and defining groups of customers and groups of services on the basis of a service purchase performance obtained per combination of customer and service, a distribution of the service purchase performance, the characteristic amount per service, and a distribution of the characteristic amount.

(Supplementary note 28)

A grouping program for causing a computer to perform a purchase trend calculation processing of calculating a trend of a customer to purchase a product per combination of customer and product or per combination of customer and product-related item as item related to a product on the basis of customers' product purchase situations, and a grouping processing of defining groups of customers and defining groups of products or groups of product-related items on the basis of the trends and a distribution of the trends.

(Supplementary note 29)

A grouping program for causing a computer to perform a characteristic amount calculation processing of calculating the characteristic amount of a product per product, and a grouping processing of defining groups of customers and groups of products on the basis of a product purchase performance obtained per combination of customer and product, a distribution of the product purchase performance, the characteristic amount per product, and a distribution of the characteristic amount.

(Supplementary note 30)

A grouping program for causing a computer to perform a purchase trend calculation processing of calculating a trend of a customer to purchase a service per combination of customer and service or per combination of customer and service-related item as item related to a service on the basis of customers' service purchase situations, and a grouping processing of defining groups of customers and defining groups of services or groups of service-related items on the basis of the trends and a distribution of the trends.

(Supplementary note 31)

A grouping program for causing a computer to perform a characteristic amount calculation processing of calculating the characteristic amount of a service per service, and a grouping processing of defining groups of customers and groups of services on the basis of a service purchase performance obtained per combination of customer and service, a distribution of the service purchase performance, the characteristic amount per service, and a distribution of the characteristic amount.

The first exemplary embodiment (see Fig. 1) has been described above assuming that the purchase trend calculation means 3 calculates a trend of a customer to purchase a product (specifically, purchase trend index) per combination of customer and product or per combination of customer and product-related item. The grouping system may acquire a trend of a customer to purchase a product (purchase trend index) from the outside. Fig. 24 illustrates an exemplary configuration of the grouping system in this case.

A grouping system 90 illustrated in Fig. 24 includes a purchase trend acquisition means 95 and the grouping means 4.

The purchase trend acquisition means 95 acquires a trend of a customer to purchase a product (purchase trend index) per combination of customer and product or per combination of customer and product-related item. At this time, the purchase trend acquisition means 95 acquires information on a type of a distribution of the purchase trend index together. For example, a manager previously stores the purchase trend index defined per combination of customer and product or per combination of customer and product-related item and the information on a type of a distribution of the purchase trend index in a server provided outside the grouping system 90. The purchase trend acquisition means 95 may acquire each purchase trend index and the information on a type of a distribution of the purchase trend index from the server via a communication network. A way that the purchase trend acquisition means 95 acquires the purchase trend index and the like from the outside is not limited to the above way and may be other way. For example, the purchase trend acquisition means 95 may receive each purchase trend index and the information on a type of its distribution which are input from the outside.

The purchase trend index acquired by the purchase trend acquisition means 95 is similar to the purchase trend index calculated by the purchase trend calculation means 3 according to the first exemplary embodiment.

The grouping means 4 defines groups of customers and defines groups of products or groups of product-related items on the basis of a trend of a customer to purchase a product and its distribution. The operation is similar to the operation of the grouping means 4 according to the first exemplary embodiment.

The purchase trend acquisition means 95 and the grouping means 4 are realized by CPU in a computer, for example. In this case, the CPU may read a grouping program from a program recording medium such as program storage device (not illustrated in Fig. 24) in the computer, and may operate as the purchase trend acquisition means 95 and the grouping means 4 according to the grouping program. Further, each means may be realized in different hardware.

In this case, the grouping program may be a program for causing the computer to perform a purchase trend acquisition processing of acquiring a trend of a customer to purchase a product per combination of customer and product or per combination of customer and product-related item as item related to a product, and a grouping processing of defining groups of customers and defining groups of products or groups of product-related items on the basis of the trends and a distribution of the trends.

The purchase trend acquisition means 95 may acquire a trend of a customer to purchase a service per combination of customer and service and per combination of customer and service-related item. In this case, the grouping means 4 may define groups of customers and may define groups of services or groups of service-related items on the basis of the trend of a customer to purchase a service and its distribution.

The second exemplary embodiment (see Fig. 5) has been described above assuming that the characteristic amount calculation means 13 calculates the characteristic amount of a product per product and the grouping means 14 calculates a product purchase performance (specifically, product purchase performance value) per combination of customer and product. The grouping system may acquire the characteristic amount of a product and the product purchase performance (product purchase performance value) from the outside. Fig. 25 illustrates an exemplary configuration of the grouping system in this case.

A grouping system 91 illustrated in Fig. 25 includes an information acquisition means 96 and a grouping means 97.

The information acquisition means 96 acquires the characteristic amount of a product per product. At this time, the information acquisition means 96 acquires information on a type of a distribution of the characteristic amount together.

The information acquisition means 96 further acquires a product purchase performance value per combination of customer and product. At this time, the information acquisition means 96 acquires information on a type of a distribution of the product purchase performance value together.

For example, a manager previously stores the characteristic amount of a product defined per product and information on a type of a distribution of the characteristic amount in a server provided outside the grouping system 91. Further, the manager previously stores a product purchase performance value defined per combination of customer and product, and information on a type of a distribution of the product purchase performance value in the server. The information acquisition means 96 may acquire the characteristic amount of each product and the information on a type of a distribution of the characteristic amount, and each product purchase performance value and the information on a type of a distribution of the product purchase performance value from the server via a communication network. A way that the information acquisition means 96 acquires the information is not limited to the above way, and may be other way. For example, the information acquisition means 96 may receive the characteristic amount of each product and the information on a type of a distribution of the characteristic amount, and each product purchase performance value and the information on a type of a distribution of the product purchase performance value which are input from the outside.

The characteristic amount of a product acquired by the information acquisition means 96 is similar to the characteristic amount of a product calculated by the characteristic amount calculation means 13 according to the second exemplary embodiment. Further, the product purchase performance value acquired by the information acquisition means 96 is similar to the product purchase performance value calculated by the grouping means 14 according to the second exemplary embodiment.

The grouping means 97 defines groups of customers and groups of products on the basis of a product purchase performance value defined per combination of customer and product, a distribution of the product purchase performance value, the characteristic amount per product, and a distribution of the characteristic amount. The operation is similar to the operation of the grouping means 14 for defining groups of customers and groups of products according to the second exemplary embodiment.

The information acquisition means 96 and the grouping means 97 are realized by CPU in a computer, for example. In this case, the CPU may read a grouping program from a program recording medium such as program storage device (not illustrated in Fig. 25) in the computer, and may operate as the information acquisition means 96 and the grouping means 97 according to the grouping program. Further, each means may be realized in different hardware.

In this case, the grouping program may be a program for causing the computer to perform an information acquisition processing of acquiring the characteristic amount of a product per product and a grouping processing of defining groups of customers and groups of products on the basis of a product purchase performance defined per combination of customer and product, a distribution of the product purchase performance, the characteristic amount per product, and a distribution of the characteristic amount.

The information acquisition means 96 may acquire the characteristic amount of a service defined per service, information on a type of a distribution of the characteristic amount, a service purchase performance defined per combination of customer and service, and information on a type of a distribution of the service purchase performance. In this case, the grouping means 97 may define groups of customers and groups of services on the basis of a service purchase performance obtained per combination of customer and service, a distribution of the service purchase performance, the characteristic amount per service, and a distribution of the characteristic amount.

The present invention has been described with reference to the exemplary embodiments, but the present invention is not limited to the above exemplary embodiments. The configuration or details of the present invention can be variously changed within the scope of the present invention understandable by those skilled in the art.

The present application claims the priority based on Japanese Patent Application No. 2014-249953 filed on December 10, 2014, the disclosure of which is entirely incorporated herein by reference.

Industrial Applicability

The present invention is suitably applied to grouping systems for grouping customers and grouping products or product-related items, or services or service-related items.

Reference Signs List

1, 11    Grouping system
2, 12    Data storage means
3        Purchase trend calculation means
4,14     Grouping means
13       Characteristic amount calculation means

**Claims**

1. A grouping system comprising:

    a purchase trend calculation means configured to calculate a trend of a customer to purchase a product per combination of customer and product or per combination of customer and product-related item as item related to a product on the basis of customers' product purchase situations; and
    a grouping means configured to define groups of customers and defining groups of products or groups of product-related items on the basis of the trends and a distribution of the trends.

2. The grouping system according to claim 1,
   wherein the purchase trend calculation means calculates a purchase trend index as an index indicating a trend of a customer to purchase a product per combination of customer and product or per combination of customer and product-related item as item related to a product on the basis of purchase data indicating customers' product purchase situations, and
   the grouping means defines groups of customers and defines groups of products or groups of product-related items on the basis of the purchase trend indexes and a parameter of a distribution of the purchase trend indexes.

3. The grouping system according to claim 2,
   wherein the grouping means defines groups of customers and groups of products or groups of product-related items by use of a likelihood of a plurality of combinations obtained by combining a group of a customer, a group of a product or a group of a product-related item, and a parameter of a distribution of a purchase trend index.

4. The grouping system according to claim 2 or claim 3,
   wherein the purchase trend calculation means calculates price elasticity as the purchase trend index per combination of customer and product, and
   the grouping means defines groups of customers and groups of products.

5. The grouping system according to claim 2 or claim 3,
   wherein the purchase trend calculation means calculates a value indicating how many days until a customer purchases a product after the advertising date of the product as the purchase trend index per combination of customer and product, and
   the grouping means defines groups of customers and groups of products.

6. The grouping system according to claim 2 or claim 3,
   wherein the purchase trend calculation means calculates a value indicating how many days until a customer purchases a product after the launch date of the product as the purchase trend index per combination of customer and product, and
   the grouping means defines groups of customers and groups of products.

7. The grouping system according to claim 2 or claim 3,
   wherein the purchase trend calculation means calculates a value indicating how many days until a customer purchases a product after the product is on display in a shop as the purchase trend index per combination of customer and product, and
   the grouping means defines groups of customers and groups of products.

8. The grouping system according to claim 2 or claim 3,
   wherein the purchase trend calculation means calculates an average purchase interval as the purchase trend index per combination of customer and product, and
   the grouping means defines groups of customers and groups of products.

9. The grouping system according to claim 2 or claim 3,
   wherein the purchase trend calculation means calculates a degree of persistence of a customer for an individual product in a product category as the purchase trend index per combination of customer and product category, and
   the grouping means defines groups of customers and defines groups of product categories as groups of product-related items.

10. The grouping system according to claim 2 or claim 3,
    wherein the purchase trend calculation means calculates a degree of persistence of a customer for an individual manufacturer of a product in a product category as the purchase trend index per combination of customer and product category, and
    the grouping means defines groups of customers, and defines groups of product categories as groups of product-related items.

11. The grouping system according to claim 2 or claim 3,
    wherein the purchase trend calculation means calculates a degree of persistence of a customer for an individual brand of a product in a product category as the purchase trend index per combination of customer and product category, and
the grouping means defines groups of customers, and defines groups of product categories as groups of product-related items.

12. The grouping system according to any one of claim 1 to claim 8,
wherein the grouping means defines groups of customers and groups of products such that one customer belongs to only one group and one product belongs to only one group.

13. The grouping system according to any one of claim 1 to claim 8,
wherein the grouping means defines groups of customers and groups of products while allowing one customer to belong to a plurality of groups and one product to belong to a plurality of groups.

14. The grouping system according to any one of claims 1, 2, 3, 9, 10, and 11,
wherein the grouping means defines groups of customers and groups of product-related items such that one customer belongs to only one group and one product-related item belongs to only one group.

15. The grouping system according to any one of claims 1, 2, 3, 9, 10 and 11,
wherein the grouping means defines groups of customers and groups of product-related items while allowing one customer to belong to a plurality of groups and one product-related item to belong to a plurality of groups.

16. A grouping system comprising:

a characteristic amount calculation means configured to calculate the characteristic amount of a product per product; and
a grouping means configured to define groups of customers and groups of products on the basis of a product purchase performance obtained per combination of customer and product, a distribution of the product purchase performance, the characteristic amount per product, and a distribution of the characteristic amount.

17. The grouping system according to claim 16,
wherein the grouping means defines groups of customers and groups of products on the basis of a purchase performance index as an index indicating a product purchase performance obtained per combination of customer and product, a parameter of a distribution of the purchase performance index, the characteristic amount per product, and a parameter of a distribution of the characteristic amount.

18. The grouping system according to claim 17,
wherein the grouping means defines groups of customers and groups of products by use of a likelihood of a plurality of combinations obtained by combining a group of a customer, a group of a product, a parameter of a distribution of a purchase performance index, and a parameter of a distribution of the characteristic amount of the product.

19. The grouping system according to any one of claim 16 to claim 18,
wherein the characteristic amount calculation means calculates a relative price of a product as the characteristic amount of the product per product.

20. The grouping system according to any one of claim 16 to claim 19,
wherein the grouping means defines groups of customers and groups of products such that one customer belongs to only one group and one product belongs to only one group.

21. The grouping system according to any one of claim 16 to claim 19,
wherein the grouping means defines groups of customers and groups of products while allowing one customer to belong to a plurality of groups and one product to belong to a plurality of groups.

22. A grouping system comprising:

a purchase trend calculation means configured to calculate a trend of a customer to purchase a service per combination of customer and service or per combination of customer and service-related item as item related to a service on the basis of customers' service purchase situations; and
a grouping means configured to define groups of customers and defining groups of services or groups of service-related items on the basis of the trends and a distribution of the trends.

**23.** A grouping system comprising:

a characteristic amount calculation means configured to calculate the characteristic amount of a service per service; and

a grouping means configured to define groups of customers and groups of services on the basis of a service purchase performance obtained per combination of customer and service, a distribution of the service purchase performance, the characteristic amount per service, and a distribution of the characteristic amount.

**24.** A grouping method comprising:

calculating a trend of a customer to purchase a product per combination of customer and product or per combination of customer and product-related item as item related to a product on the basis of customers' product purchase situations; and

defining groups of customers and defining groups of products or groups of product-related items on the basis of the trends and a distribution of the trends.

**25.** A grouping method comprising:

calculating the characteristic amount of a product per product; and

defining groups of customers and groups of products on the basis of a product purchase perfonnance obtained per combination of customer and product, a distribution of the product purchase performance, the characteristic amount per product, and a distribution of the characteristic amount.

**26.** A grouping method comprising:

calculating a trend of a customer to purchase a service per combination of customer and service or per combination of customer and service-related item as item related to a service on the basis of customers' service purchase situations; and

defining groups of customers and defining groups of services or groups of service-related items on the basis of the trends and a distribution of the trends.

**27.** A grouping method comprising:

calculating the characteristic amount of a service per service; and

defining groups of customers and groups of services on the basis of a service purchase performance obtained per combination of customer and service, a distribution of the service purchase performance, the characteristic amount per service, and a distribution of the characteristic amount.

**28.** A grouping program for causing a computer to perform:

a purchase trend calculation processing of calculating a trend of a customer to purchase a product per combination of customer and product or per combination of customer and product-related item as item related to a product on the basis of customers' product purchase situations; and

a grouping processing of defining groups of customers and defining groups of products or groups of product-related items on the basis of the trends and a distribution of the trends.

**29.** A grouping program for causing a computer to perform:

a characteristic amount calculation processing of calculating the characteristic amount of a product per product; and

a grouping processing of defining groups of customers and groups of products on the basis of a product purchase performance obtained per combination of customer and product, a distribution of the product purchase performance, the characteristic amount per product, and a distribution of the characteristic amount.

**30.** A grouping program for causing a computer to perform:

a purchase trend calculation processing of calculating a trend of a customer to purchase a service per combination of customer and service or per combination of customer and service-related item as item related to a service on the basis of customers' service purchase situations; and

a grouping processing of defining groups of customers and defining groups of services or groups of service-related items on the basis of the trends and a distribution of the trends.

**31.** A grouping program for causing a computer to perform:

a characteristic amount calculation processing of calculating the characteristic amount of a service per service; and

a grouping processing of defining groups of customers and groups of services on the basis of a service purchase performance obtained per combination of customer and service, a distribution of the service purchase performance, the characteristic amount per service, and a distribution of the characteristic amount.

# FIG. 1

GROUPING SYSTEM 〜1

DATA STORAGE MEANS 〜2

PURCHASE TREND CALCULATION MEANS 〜3

GROUPING MEANS 〜4

# FIG. 2

PRODUCT ID

0    1    2    3    4    5    ...

CUSTOMER ID

0    $x_{0,0}$

1    $x_{1,1}$

2    $x_{2,1}$              $x_{2,4}$

3

4              $x_{4,3}$

5

:

# FIG. 3

PRODUCT CLUSTER

...     9     ...

(6, 8, 10)

CUSTOMER CLUSTER

3   (2, 5, 9)

$x_{2,6}$

$x_{5,6}$ ETC.

$\theta_{3,9}$

# FIG. 4

START

↓

CALCULATE PURCHASE TREND INDEX $x_{c,i}$ PER COMBINATION OF CUSTOMER AND PRODUCT — S1

↓

DETERMINE CUSTOMER CLUSTERS AND PRODUCT CLUSTERS BY DEFINING COMBINATIONS OF CUSTOMER CLUSTER, PRODUCT CLUSTER, AND PARAMETER OF DISTRIBUTION OF $x_{c,i}$ SUCH THAT LIKELIHOOD OF EQUATION (5) IS MAXIMUM — S2

↓

END

# FIG. 5

GROUPING SYSTEM — 11

DATA STORAGE MEANS — 12

CHARACTERISTIC AMOUNT CALCULATION MEANS — 13

GROUPING MEANS — 14

# FIG. 6

START

↓

CALCULATE RELATIVE PRICE $r_i$ PER PRODUCT ⌇S11

↓

DERIVE PURCHASE NUMBER $u_{c,i}$
PER COMBINATION OF CUSTOMER AND PRODUCT ⌇S12

↓

DETERMINE CUSTOMER CLUSTERS AND PRODUCT
CLUSTERS BY DEFINING COMBINATIONS OF
CUSTOMER CLUSTER, PRODUCT CLUSTER, AND
PARAMETERS $\theta'$ AND $\phi$ SUCH THAT LIKELIHOOD
OF EQUATION (7) IS MAXIMUM ⌇S13

↓

END

# FIG. 7

| CUSTOMER ID | AGE | SEX |
|---|---|---|
| 01 | 30 | FEMALE |
| 02 | 30 | FEMALE |
| 03 | 32 | MALE |

# FIG. 8

| PRODUCT ID | PRODUCT NAME | STANDARD PRICE | PRODUCT CATEGORY | LAUNCH DATE |
|---|---|---|---|---|
| 11 | BEAN JAM BREAD | 100 | PASTRY | 2014/3/1 |
| 12 | PREMIUM BEAN JAM BREAD | 180 | PASTRY | 2014/1/1 |
| 13 | 6 SLICES | 130 | PAIN DE MIE | 2013/1/1 |
| 14 | SLIGHTLY SWEET | 180 | PAIN DE MIE | 2014/2/1 |

# FIG. 9

| CUSTOMER ID | PRODUCT ID | ACTUAL SALES PRICE | PURCHASE DATE |
|---|---|---|---|
| 01 | 11 | 100 | 2014/3/5 |
| 01 | 11 | 90 | 2014/3/10 |
| 01 | 11 | 80 | 2014/3/13 |
| 01 | 11 | 90 | 2014/3/17 |
| 01 | 11 | 80 | 2014/3/19 |
| 01 | 12 | 180 | 2014/3/2 |
| 01 | 12 | 180 | 2014/3/14 |
| 01 | 14 | 180 | 2014/3/4 |
| 01 | 14 | 170 | 2014/3/18 |
| 02 | 13 | 120 | 2014/3/15 |
| 02 | 13 | 120 | 2014/3/19 |

# FIG. 10

| PRODUCT CATEGORY | AVERAGE VALUE OF STANDARD PRICE | STANDARD DEVIATION OF STANDARD PRICE |
|---|---|---|
| PASTRY | 120 | 20 |
| PAIN DE MIE | 150 | 30 |

# FIG. 11

| PRODUCT ID | PRODUCT NAME | RELATIVE PRICE |
|---|---|---|
| 11 | BEAN JAM BREAD | -1 |
| 12 | PREMIUM BEAN JAM BREAD | 3 |
| 13 | 6 SLICES | -0.7 |
| 14 | SLIGHTLY SWEET | 1 |

# FIG. 12

| CUSTOMER ID | PRODUCT ID | ACTUAL SALES PRICE | PURCHASE NUMBER |
|---|---|---|---|
| 01 | 11 | 100 | 1 |
| 01 | 11 | 90 | 2 |
| 01 | 11 | 80 | 2 |
| 01 | 12 | 180 | 2 |
| 01 | 14 | 180 | 1 |
| 01 | 14 | 170 | 1 |
| 02 | 13 | 120 | 2 |

# FIG. 13

| PRODUCT ID | ADVERTISING DATE |
|---|---|
| 11 | 2014/3/1 |
| 11 | 2014/3/8 |
| 11 | 2014/3/15 |
| 12 | 2014/3/1 |
| 12 | 2014/3/6 |
| 12 | 2014/3/12 |
| 13 | 2014/3/1 |

# FIG. 14

| CUSTOMER ID | PRODUCT ID | ELAPSED DAYS AFTER ADVERTISING DATE |
|---|---|---|
| 01 | 11 | 4 |
| 01 | 11 | 2 |
| 01 | 11 | 5 |
| 01 | 11 | 2 |
| 01 | 11 | 4 |
| 01 | 12 | 1 |
| 01 | 12 | 8 |
| 01 | 14 | inf. |
| 01 | 14 | inf. |
| 02 | 13 | 14 |
| 02 | 13 | 18 |

# FIG. 15

| CUSTOMER ID | PRODUCT ID | ELAPSED DAYS AFTER LAUNCH DATE |
|---|---|---|
| 01 | 11 | 4 |
| 01 | 11 | 9 |
| 01 | 11 | 12 |
| 01 | 11 | 16 |
| 01 | 11 | 18 |
| 01 | 12 | 60 |
| 01 | 12 | 72 |
| 01 | 14 | 31 |
| 01 | 14 | 45 |
| 02 | 13 | 438 |
| 02 | 13 | 442 |

# FIG. 16

| CUSTOMER ID | PRODUCT ID | AVERAGE PURCHASE INTERVAL |
|---|---|---|
| 01 | 11 | 4 |
| 01 | 12 | 12 |
| 01 | 14 | 14 |
| 02 | 13 | 4 |

# FIG. 17

| PRODUCT ID | PRODUCT NAME | PRODUCT CATEGORY | MANUFACTURER |
|---|---|---|---|
| 11 | BEAN JAM BREAD | PASTRY | UMIZAKI BREAD |
| 12 | PREMIUM BEAN JAM BREAD | PASTRY | UMIZAKI BREAD |
| 15 | CURRY BREAD | PASTRY | YAMATANI BREAD |
| 16 | MELON BREAD | PASTRY | YAMATANI BREAD |
| 17 | YAKISOBA BREAD | PASTRY | YAMATANI BREAD |
| 18 | SPICY CURRY BREAD | PASTRY | YAMATANI BREAD |
| 19 | FLUFFY BREAD | PAIN DE MIE | YAMATANI BREAD |

# FIG. 18

| CUSTOMER ID | PRODUCT ID | PURCHASE NUMBER |
|---|---|---|
| 01 | 11 | 1 |
| 01 | 12 | 2 |
| 01 | 15 | 2 |
| 01 | 16 | 1 |
| 02 | 11 | 2 |
| 02 | 12 | 3 |
| 02 | 18 | 1 |
| 03 | 12 | 2 |
| 03 | 16 | 8 |
| 03 | 17 | 1 |

# FIG. 19

| CUSTOMER ID | PRODUCT CATEGORY | DEGREE OF PERSISTENCE $(x_{c,i})$ |
|---|---|---|
| 01 | PASTRY | 0.28 |
| 01 | PAIN DE MIE | 0.8 |
| 01 | RICE BALL | 0.3 |
| 02 | PASTRY | 0.39 |
| 02 | PAIN DE MIE | 0.9 |
| 02 | RICE BALL | 0.3 |
| 03 | PASTRY | 0.57 |
| 03 | PAIN DE MIE | 0.8 |
| 03 | RICE BALL | 0.7 |

# FIG. 20

| CUSTOMER ID | MANUFACTURER | PURCHASE NUMBER |
|---|---|---|
| 01 | UMIZAKI BREAD | 3 |
| 01 | YAMATANI BREAD | 3 |
| 02 | UMIZAKI BREAD | 5 |
| 02 | YAMATANI BREAD | 1 |
| 03 | UMIZAKI BREAD | 2 |
| 03 | YAMATANI BREAD | 9 |

# FIG. 21

1000

CPU — 1001

| AUXILIARY STORAGE DEVICE | MAIN STORAGE DEVICE | INTERFACE |

1003        1002        1004

# FIG. 22

GROUPING SYSTEM    ~ 1

PURCHASE TREND CALCULATION MEANS   ~ 3

GROUPING MEANS   ~ 4

# FIG. 23

GROUPING SYSTEM ~11

CHARACTERISTIC AMOUNT CALCULATION MEANS ~13

GROUPING MEANS ~14

# FIG. 24

GROUPING SYSTEM ~90

PURCHASE TREND ACQUISITION MEANS ~95

GROUPING MEANS ~4

# FIG. 25

GROUPING SYSTEM ~91

INFORMATION ACQUISITION MEANS ~96

GROUPING MEANS ~97

## INTERNATIONAL SEARCH REPORT

| International application No. |
| --- |
| PCT/JP2015/005926 |

### A. CLASSIFICATION OF SUBJECT MATTER
*G06Q30/02*(2012.01)i

According to International Patent Classification (IPC) or to both national classification and IPC

### B. FIELDS SEARCHED

Minimum documentation searched (classification system followed by classification symbols)
G06Q30/02

Documentation searched other than minimum documentation to the extent that such documents are included in the fields searched
Jitsuyo Shinan Koho         1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2002-73946 A  (Yugen Kaisha Ikeda Design Kenkyusho),<br>12 March 2002 (12.03.2002),<br>claims 1, 3<br>(Family: none) | 1,2,4-17,<br>19-31<br>3,18 |
| Y<br>A | JP 2009-134487 A  (Hitachi Software Engineering Co., Ltd.),<br>18 June 2009 (18.06.2009),<br>claims 1, 3<br>(Family: none) | 1,2,4-17,<br>19-31<br>3,18 |

☒ Further documents are listed in the continuation of Box C.          ☐ See patent family annex.

| * Special categories of cited documents: | |
| --- | --- |
| "A" document defining the general state of the art which is not considered   to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 January 2016 (19.01.16) | 26 January 2016 (26.01.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

**INTERNATIONAL SEARCH REPORT**

International application No.

PCT/JP2015/005926

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2008-516355 A  (Dunnhumby Ltd.),<br>15 May 2008 (15.05.2008),<br>claims 1, 5, 33; paragraph [0020]<br>& US 2006/0080265 A1<br>claims 1, 5, 33; paragraph [0029]<br>& WO 2006/044183 A2     & KR 10-2007-0085252 A<br>& CA 2583639 A1          & BR PI0516342 A<br>& AU 2005296133 A        & MX 2007004430 A | 4,9-11 |
| Y | JP 2001-331628 A  (Justsystem Corp.),<br>30 November 2001 (30.11.2001),<br>paragraph [0056]<br>(Family: none) | 5 |
| Y | JP 2008-186413 A  (NTT Data Corp.),<br>14 August 2008 (14.08.2008),<br>paragraph [0012]<br>(Family: none) | 6 |
| Y | JP 2007-272571 A  (Nomura Research Institute,<br>Ltd.),<br>18 October 2007 (18.10.2007),<br>paragraphs [0071] to [0074]<br>(Family: none) | 7 |
| Y | JP 2014-78179 A  (Dentsu Inc.),<br>01 May 2014 (01.05.2014),<br>paragraph [0063]<br>(Family: none) | 16,17,19,20,<br>21,23,25,27,<br>29,31 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008516355 PCT

- JP 2014249953 A

**Non-patent literature cited in the description**

- **CLIVE HUMBY ; TERRY HUNT ; TIM PHILLIPS.** Scoring Points: How Tesco continues to win customer loyalty. Kogan Page Ltd

- Purchase motives and life styles analyzed, 40% rise in sales by "product DNA" (2/2). Nikkei Business Publications Inc, 18 September 2014